# EUROPEAN PATENT APPLICATION

(11) **EP 3 611 994 A1**
(43) Date of publication of application: **19.02.2020**
(21) Application number: 17908180.7
(22) Date of filing: 27.10.2017
(51) Int. Cl.: H04W 76/00, H04W 72/04

(54) **SEMI-PERSISTENT SCHEDULING METHOD, USER EQUIPMENT AND NETWORK DEVICE**

(30) Priority: 05.05.2017 WO PCT/CN2017/083175
(71) Applicant: Huawei Technologies Co., Ltd., Longgang District Shenzhen, Guangdong 518129 (CN)
(72) Inventor: KUANG, Yiru, Shenzhen Guangdong 518129 (CN); XU, Haibo, Shenzhen Guangdong 518129 (CN); WANG, Jian, Shenzhen Guangdong 518129 (CN)
(74) Representative: Maiwald Patent- und Rechtsanwaltsgesellschaft mbH
(86) International application number: PCT/CN2017/108132
(87) International publication number: WO 2018/201679

(57) **Abstract**

Embodiments of this application provide a semi-persistent scheduling method, user equipment, and a network device. The method includes: receiving, by a first device, first information sent by a network device, where the first information is used to instruct to activate or release semi-persistent scheduling SPS of at least one second device; and sending, by the first device, second information to the at least one second device, where the second information is used to instruct to activate or release the semi-persistent scheduling SPS of the at least one second device. This embodiment of this application enables the first device and the second device to semi-statically receive or send data on a designated physical control channel, so that the first device and the second device do not need to send control information each time data is transmitted, to reduce signaling overheads on a link. Moreover, power consumption of the first device and the second device can be reduced.

## Description

### TECHNICAL FIELD

This application relates to the communications field, and more specifically, to a sidelink scheduling method, user equipment, and a network device in the communications field.

### BACKGROUND

In device-to-device (Device-to-Device, D2D) communication, a transmit end directly sends data to a receive end instead of transitting the data through a base station or a cellular network. In a relatively special manner of D2D communication, user equipment (User Equipment, UE) is connected to a network through another user equipment having a relay function. This scenario is referred to as UE-to-network relay (UE-to-Network relay). Usually, the former is referred to as remote user equipment (Remote UE), and the latter is referred to as relay user equipment (Relay UE). Connection and data transmission with the network is performed through the relay user equipment with two objectives. First, the remote user equipment is covered. In some cases, the remote user equipment is located beyond coverage of the network. To be capable of sending uplink data to a network device or receiving downlink data sent by a network device, the remote user equipment may be connected to the network device through relay user equipment. Second, some remote user equipments such as a wearable device are characterized by small volume, small battery capacity, and low power consumption. To assist the wearable device in reducing power consumption, the wearable device is enabled to communicate with a network device through relay user equipment, and the relay user equipment may be an intelligent mobile terminal of a wearer of the wearable device.

Semi-persistent scheduling (Semi-Persistent scheduling, SPS) allows a radio resource to be semi-statically configured. Different from dynamic scheduling in which a radio resource is allocated once in each scheduling transmission time interval (Transmission Time Interval, TTI), a radio resource is periodically allocated to particular UE in SPS. SPS is quite effective for a periodic service in which a data packet is small and a size of the data packet is basically unchanged, for example, a voice over internet protocol (Voice over Internet Protocol, VoIP) service. Both a time relationship and a required radio resource size of such a service are predictable.

In the UE-to-network relay scenario, it has been determined that the voice over internet protocol (VoIP) service needs to be effectively supported in the scenario. Therefore, introduction of an SPS technology in the scenario can effectively ensure a requirement of the voice over internet protocol service, and reduce signaling overheads of an air interface and power consumption of the remote UE. In the prior art, SPS on an uplink and a downlink, and broadcast SPS on a sidelink (sidelink, SL) in a vehicle to everything (Vehicle to Everything, V2X) service can have been supported. However, currently, there has been no sidelink scheduling solution for one-to-one communication between relay UE and remote UE in the UE-to-network relay scenario.

### SUMMARY

Embodiments of this application provide a semi-persistent scheduling method, user equipment, and a network device. The semi-persistent scheduling method may be a sidelink scheduling method, and signaling overheads on a sidelink can be reduced.

According to a first aspect, a sidelink scheduling method is provided. The method includes:
receiving, by first user equipment, first information sent by a network device, where the first information is used to instruct to activate or release semi-persistent scheduling SPS of a sidelink of at least one second user equipment; and
sending, by the first user equipment, second information to the at least one second user equipment, where the second information is used to instruct to activate or release the semi-persistent scheduling SPS of the sidelink of the at least one second user equipment.

This embodiment of this application enables the first user equipment and the second user equipment to semi-statically receive or send data on a designated physical sidelink shared channel (Physical Sidelink Shared Channel, PSSCH), so that the first user equipment and the second user equipment do not need to send a physical sidelink control channel (Physical Sidelink Control Channel, PSCCH) each time data is transmitted, to reduce signaling overheads on a sidelink. Moreover, the first user equipment and the second user equipment do not need to transmit or decode the PSCCH, so that power consumption of the first user equipment and the second user equipment can be reduced.

In this embodiment of this application, demodulating, by user equipment, a PSCCH may be understood as obtaining, by the user equipment, control information included in the PSCCH.

In some possible implementations, the first information is further used to indicate directions of the semi-persistent scheduling SPS of the sidelink, the directions of the semi-persistent scheduling SPS of the sidelink include a first direction and a second direction, the second user equipment receives, in the first direction, data sent by the first user equipment, and the first user equipment receives, in the second direction, data sent by the second user equipment.

For example, if a value of a first indication bit is 1, it indicates that the SL SPS is to be activated; and if a value of the first indication bit is 0, it indicates that the SL SPS is to be released. If a value of a second indication bit is 1, it indicates that a direction of the SL SPS is the first direction. If a value of the second indication bit is 0, it indicates that a direction of the SL SPS is the second direction.

In some possible implementations, before the receiving, by first user equipment, first information sent by a network device, the method further includes:
receiving, by the first user equipment, a first message sent by the network device, where the first message includes a configuration of the semi-persistent scheduling SPS of the sidelink of the at least one second user equipment connected to the first user equipment, where
the configuration of the semi-persistent scheduling SPS of the sidelink includes at least one of a configuration of semi-persistent scheduling SPS of the sidelink in the first direction and a configuration of semi-persistent scheduling SPS of the sidelink in the second direction.

In some possible implementations, before the receiving, by first user equipment, first information sent by a network device, the method further includes:
forwarding, by the first user equipment to the at least one second user equipment, a second message sent by the network device, where the second message includes the configuration of the semi-persistent scheduling SPS of the sidelink of the at least one second user equipment connected to the first user equipment, where
the configuration of the semi-persistent scheduling SPS of the sidelink includes at least one of the configuration of the semi-persistent scheduling SPS of the sidelink in the first direction and the configuration of the semi-persistent scheduling SPS of the sidelink in the second direction.

Each of the first message and the second message may be specifically a radio resource control (Radio Resource Control, RRC) connection reconfiguration message or another RRC message. The network device may configure a related parameter of the semi-persistent scheduling of the sidelink for the first user equipment or the second user equipment through an RRC message. Moreover, in this embodiment of this application, the RRC message may further include an RNTI, and the RNTI may be an SL SPS related RNTI or an ordinary RNTI.

In some possible implementations, the first information is included in a third message, and the receiving, by first user equipment, first information sent by a network device includes:
receiving, by the first user equipment, the third message sent by the network device, where the third message further includes a configuration of the semi-persistent scheduling SPS of the sidelink of the at least one second user equipment connected to the first user equipment, where
the configuration of the semi-persistent scheduling SPS of the sidelink includes at least one of a configuration of semi-persistent scheduling SPS of the sidelink in the first direction and a configuration of semi-persistent scheduling SPS of the sidelink in the second direction.

To be specific, after sending the third message including the configuration of the semi-persistent scheduling SPS of the sidelink, the network device may not need to resend, to the first user equipment and the second user equipment, information or a message used to instruct to activate or release the semi-persistent scheduling SPS of the sidelink of the second user equipment. While being used to configure the semi-persistent scheduling SPS of the sidelink, the third message may be further used to instruct to activate or release the semi-persistent scheduling SPS of the sidelink of the second user equipment, and after receiving the third message, the first user equipment may send, to the second user equipment, the second message used to activate or release the semi-persistent scheduling SPS of the sidelink of the second user equipment.

Herein, the third message may be specifically an RRC connection reconfiguration message or another RRC message.

In some possible implementations, the configuration of the semi-persistent scheduling SPS of the sidelink is a period configuration of the semi-persistent scheduling SPS; or the configuration of the semi-persistent scheduling SPS of the sidelink is a resource configuration of the semi-persistent scheduling SPS.

To be specific, the semi-persistent scheduling configuration of the sidelink may be a period configuration or a resource configuration. The SL SPS resource configuration is allocation of a set of SL SPS resources, the set of SL SPS resources includes one or more sidelink resources, and the first user equipment or the second user equipment may transmit data on an allocated SL SPS resource. In an example, a sidelink control (Sidelink Control, SC) period may be used as a period of a sidelink resource. Herein, the SL SPS resource may be a dedicated resource or a non-dedicated resource.

In some possible implementations, the first information is downlink control information (Downlink Control Information, DCI) scrambled by using a first radio network temporary identifier (Radio Network Temporary Identity, RNTI), where the first RNTI is an RNTI corresponding to the second user equipment, or the first RNTI is an RNTI corresponding to the first user equipment.

If the first RNTI is an RNTI corresponding to the first user equipment, the DCI further includes an identifier of the second user equipment.

The first RNTI is an SL SPS related RNTI corresponding to the second user equipment. Specifically, when the first user equipment receives the DCI, the first user equipment descrambles the DCI by using all SL SPS related RNTIs of the first user equipment and second user equipments connected to the first user equipment. If the DCI is descrambled successfully by using a particular SL SPS related RNTI of some second user equipment, the DCI is used to activate or release the SL SPS of the second user equipment.

If the first RNTI is an SL SPS related RNTI corresponding to the first user equipment, the DCI further includes an identifier of the second user equipment. Specifically, when the first user equipment receives the DCI, and after the first user equipment successfully descrambles the downlink control information by using an SL SPS related RNTI of the first user equipment, the first user equipment may obtain the identifier of the second user equipment, and then the first user equipment may determine to activate or release the SL SPS of the second user equipment.

In some possible implementations, the DCI may further include an SPS indication bit. If a value of the SPS indication bit is 1, it indicates that the DCI is SL SPS related DCI; and if a value of the SPS indication bit is 0, it indicates that the DCI is ordinary DCI, that is, dynamically scheduled DCI. In this case, the DCI may be scrambled by using an ordinary RNTI. To be specific, the DCI may alternatively be not scrambled by using an SL SPS related RNTI in this embodiment of this application.

In some possible implementations, the first information is included in an indication message, and the receiving, by first user equipment, first information sent by a network device includes:
receiving, by the first user equipment, the indication message sent by the network device, where the indication message further includes an identifier of the second user equipment.

Specifically, when the configuration of the SL SPS is a period configuration of the SL SPS and a resource location of the SL is configured, or when the configuration of the SL SPS is the resource configuration of the SL SPS, the DCI does not need to be sent to the first user equipment to indicate the resource location. In this case, the first information sent by the network device to the first user equipment may be indication information used to instruct to activate or release the SL SPS, or the first information may be included in the indication message used to instruct to activate or release the SL SPS.

In some possible implementations, the second information is first sidelink control information SCI, the first SCI further includes indication information, and the indication information is used to indicate the directions of the semi-persistent scheduling SPS of the sidelink.

In some possible implementations,
the second information is second SCI, and the second SCI is used to indicate a resource location of a physical sidelink shared channel sent in the first direction; or
the second information is third SCI, and the third SCI is used to indicate a resource location of a physical sidelink shared channel sent in the second direction.

In some possible implementations, the SCI may be scrambled by using a particular SL SPS related RNTI. The particular SL SPS related RNTI may be unique to each second user equipment or may be common to a plurality of second user equipments. When the second user equipment receives the sidelink control information, if the second user equipment successfully descrambles the sidelink control information by using the particular SL SPS related RNTI of the second user equipment, the sidelink control information is used to activate or release the SL SPS of the second user equipment.

In some possible implementations, the sidelink control information SCI may alternatively be sent by using the solution in the prior art. To be specific, the SCI may be not scrambled by using an RNTI. Alternatively, the SCI may be scrambled by using an ordinary RNTI. In this case, the sidelink control information may further include an SPS indication bit. If a value of the SPS indication bit is 1, it indicates that the SCI is SL SPS related SCI; and if a value of the SPS indication bit is 0, it indicates that the SCI is ordinary SCI, that is, dynamically scheduled SCI.

In some possible implementations, after the SL SPS in the second direction is activated, and when one or more times of transmission without data occur in the second direction, the first user equipment sends a release indication message to the network device.

In this embodiment of this application, for the SL SPS, the RRC message sent by the network device to the first user equipment may include configuration control information, and the control information may be an integer n, indicating that the release indication message is sent after n times of transmission without data occur in the PSSCH of the SL SPS. To be specific, the SL SPS is released by default.

According to a second aspect, an embodiment of the present invention provides user equipment, configured to perform the method according to the first aspect or any possible implementation of the first aspect. Specifically, the user equipment includes modules configured to perform the method according to the first aspect or any possible implementation of the first aspect.

According to a third aspect, an embodiment of the present invention provides user equipment. The user equipment includes: a memory, a processor, and a transceiver. The memory is configured to store an instruction, the processor is configured to perform the instruction stored in the memory, and when the processor executes the instruction stored in the memory, the execution enables the processor to perform the method according to the first aspect or any possible implementation of the first aspect.

According to a fourth aspect, an embodiment of the present invention provides a computer readable medium, configured to store a computer program, and the computer program includes an instruction used to perform the method according to the first aspect or any possible implementation of the first aspect.

According to a fifth aspect, an embodiment of this application provides a sidelink scheduling method, including:
sending, by a network device, first information to first user equipment, where the first information is used to instruct to activate or release semi-persistent scheduling SPS of a sidelink of at least one second user equipment.

This embodiment of this application enables the first user equipment and the second user equipment to semi-statically receive or send data on a designated PSSCH, so that the first user equipment and the second user equipment do not need to send a PSCCH each time data is transmitted, to reduce signaling overheads on a sidelink. Moreover, the first user equipment and the second user equipment do not need to transmit or decode the PSCCH, so that power consumption of the first user equipment and the second user equipment can be reduced.

In this embodiment of this application, demodulating, by user equipment, a PSCCH may be understood as obtaining, by the user equipment, control information included in the PSCCH.

In some possible implementations, the first information is further used to indicate directions of the semi-persistent scheduling SPS of the sidelink, the directions of the semi-persistent scheduling SPS of the sidelink include a first direction and a second direction, the second user equipment receives, in the first direction, data sent by the first user equipment, and the first user equipment receives, in the second direction, data sent by the second user equipment.

For example, if a value of a first indication bit is 1, it indicates that the SL SPS is to be activated; and if a value of the first indication bit is 0, it indicates that the SL SPS is to be released. If a value of a second indication bit is 1, it indicates that a direction of the SL SPS is the first direction. If a value of the second indication bit is 0, it indicates that a direction of the SL SPS is the second direction.

In some possible implementations, before the sending, by a network device, first information to first user equipment, the method further includes:
sending, by the network device, a first message to the first user equipment, where the first message includes a configuration of the semi-persistent scheduling SPS of the sidelink of the at least one second user equipment connected to the first user equipment, where
the configuration of the semi-persistent scheduling SPS of the sidelink includes at least one of a configuration of semi-persistent scheduling SPS of the sidelink in the first direction and a configuration of semi-persistent scheduling SPS of the sidelink in the second direction.

In some possible implementations, before the sending, by a network device, first information to first user equipment, the method further includes:
sending, by the network device, a second message to the first user equipment, where the second message includes a configuration of the semi-persistent scheduling SPS of the sidelink of the at least one second user equipment connected to the first user equipment, where
the configuration of the semi-persistent scheduling SPS of the sidelink includes at least one of a configuration of semi-persistent scheduling SPS of the sidelink in the first direction and a configuration of semi-persistent scheduling SPS of the sidelink in the second direction.

Each of the first message and the second message may be specifically an RRC connection reconfiguration message or another RRC message. The network device may configure a related parameter of the semi-persistent scheduling of the sidelink for the first network device or the second network device through an RRC message. Moreover, in this embodiment of this application, the RRC message may further include an RNTI, and the RNTI may be an SL SPS related RNTI or an ordinary RNTI.

In some possible implementations, the first information is included in a third message, and the sending, by a network device, first information to first user equipment includes:
sending, by the network device, the third message to the first user equipment, where the third message includes a configuration of the semi-persistent scheduling SPS of the sidelink of the at least one second user equipment connected to the first user equipment, where
the configuration of the semi-persistent scheduling SPS of the sidelink includes at least one of a configuration of semi-persistent scheduling SPS of the sidelink in the first direction and a configuration of semi-persistent scheduling SPS of the sidelink in the second direction.

To be specific, after sending the third message including the configuration of the semi-persistent scheduling SPS of the sidelink, the network device may not need to resend, to the first user equipment and the second user equipment, information or a message used to instruct to activate or release the semi-persistent scheduling SPS of the sidelink of the second user equipment. While being used to configure the semi-persistent scheduling SPS of the sidelink, the third message may be further used to instruct to activate or release the semi-persistent scheduling SPS of the sidelink of the second user equipment, and after receiving the third message, the first user equipment may send, to the second user equipment, the second message used to activate or release the semi-persistent scheduling SPS of the sidelink of the second user equipment.

Herein, the third message may be specifically an RRC connection reconfiguration message or another RRC message.

In some possible implementations,
the configuration of the semi-persistent scheduling SPS of the sidelink is a period configuration of the semi-persistent scheduling SPS; or
the configuration of the semi-persistent scheduling SPS of the sidelink is a resource configuration of the semi-persistent scheduling SPS.

To be specific, the semi-persistent scheduling configuration of the sidelink may be a period configuration or a resource configuration. The SL SPS resource configuration is allocation of a set of SL SPS resources, the set of SL SPS resources includes one or more sidelink resources, and the first user equipment or the second user equipment may transmit data on an allocated SL SPS resource. In an example, a sidelink control (Sidelink Control, SC) period may be used as a period of a sidelink resource. Herein, the SL SPS resource may be a dedicated resource or a non-dedicated resource.

In some possible implementations, the first information is downlink control information DCI scrambled by using a first radio network temporary identifier RNTI, where the first RNTI is an RNTI corresponding to the second user equipment, or the first semi-persistent scheduling SPS RNTI is an RNTI corresponding to the first user equipment.

If the first RNTI is an RNTI corresponding to the first user equipment, the DCI further includes an identifier of the second user equipment.

The first RNTI is an SL SPS related RNTI corresponding to the second user equipment. Specifically, when the first user equipment receives the DCI, the first user equipment descrambles the DCI by using all SL SPS related RNTIs of the first user equipment and second user equipments connected to the first user equipment. If the DCI is descrambled successfully by using a particular SL SPS related RNTI of some second user equipment, the DCI is used to activate or release the SL SPS of the second user equipment.

If the first RNTI is an SL SPS related RNTI corresponding to the first user equipment, the DCI further includes an identifier of the second user equipment. Specifically, when the first user equipment receives the DCI, and after the first user equipment successfully descrambles the downlink control information by using an SL SPS related RNTI of the first user equipment, the first user equipment may obtain the identifier of the second user equipment, and then the first user equipment may determine to activate or release the SL SPS of the second user equipment.

In some possible implementations, the DCI may further include an SPS indication bit. If a value of the SPS indication bit is 1, it indicates that the DCI is SL SPS related DCI; and if a value of the SPS indication bit is 0, it indicates that the DCI is ordinary DCI, that is, dynamically scheduled DCI. In this case, the DCI may be scrambled by using an ordinary RNTI. To be specific, the DCI may alternatively be not scrambled by using an SL SPS related RNTI in this embodiment of this application.

In some possible implementations, the first information is included in an indication message, and the sending, by a network device, first information to first user equipment includes:
sending, by the network device, the indication message to the first user equipment, where the indication message further includes an identifier of the second user equipment.

Specifically, when the configuration of the SL SPS is a period configuration of the SL SPS and a resource location of the SL is configured, or when the configuration of the SL SPS is the resource configuration of the SL SPS, the DCI does not need to be sent to the first user equipment to indicate the resource location. In this case, the first information sent by the network device to the first user equipment may be indication information used to instruct to activate or release the SL SPS, or the first information may be included in the indication message used to instruct to activate or release the SL SPS.

In some possible implementations, the RRC message sent by the network device to the first user equipment may include configuration control information, and the control information may be an integer n, indicating that the release indication message is sent after n times of transmission without data occur in the PSSCH of the SL SPS. After the network device receives the release indication message sent by the first user equipment, the network device releases the SL SPS by default.

According to a sixth aspect, an embodiment of the present invention provides a network device, configured to perform the method according to the fifth aspect or any possible implementation of the fifth aspect. Specifically, the user equipment includes modules configured to perform the method according to the fifth aspect or any possible implementation of the fifth aspect.

According to a seventh aspect, an embodiment of the present invention provides a network device. The network device includes: a memory, a processor, and a transceiver. The memory is configured to store an instruction, the processor is configured to perform the instruction stored in the memory, and when the processor executes the instruction stored in the memory, the execution enables the processor to perform the method according to the fifth aspect or any possible implementation of the fifth aspect.

According to an eighth aspect, an embodiment of the present invention provides a computer readable medium, configured to store a computer program, and the computer program includes an instruction used to perform the method according to the fifth aspect or any possible implementation of the fifth aspect.

According to a ninth aspect, this application provides a sidelink scheduling method, including:
receiving, by second user equipment, second information sent by first user equipment, where the second information is used to instruct to activate or release semi-persistent scheduling SPS of a sidelink of the second user equipment.

This embodiment of this application enables the first user equipment and the second user equipment to semi-statically receive or send data on a designated PSSCH, so that the first user equipment and the second user equipment do not need to send a PSCCH each time data is transmitted, to reduce signaling overheads on a sidelink. Moreover, the first user equipment and the second user equipment do not need to transmit or decode the PSCCH, so that power consumption of the first user equipment and the second user equipment can be reduced.

In this embodiment of this application, demodulating, by user equipment, a PSCCH may be understood as obtaining, by the user equipment, control information included in the PSCCH.

In some possible implementations, directions of the semi-persistent scheduling SPS of the sidelink include a first direction and a second direction, the second user equipment receives, in the first direction, data sent by the first user equipment, and the first user equipment receives, in the second direction, data sent by the second user equipment.

For example, if a value of a first indication bit is 1, it indicates that the SL SPS is to be activated; and if a value of the first indication bit is 0, it indicates that the SL SPS is to be released. If a value of a second indication bit is 1, it indicates that a direction of the SL SPS is the first direction. If a value of the second indication bit is 0, it indicates that a direction of the SL SPS is the second direction.

In some possible implementations, the second user equipment receives a second message that is sent by the network device and that is forwarded by the first user equipment, where the second message includes a configuration of the semi-persistent scheduling SPS of the sidelink of the second user equipment connected to the first user equipment, where
the configuration of the semi-persistent scheduling SPS of the sidelink includes at least one of a configuration of semi-persistent scheduling SPS of the sidelink in the first direction and a configuration of semi-persistent scheduling SPS of the sidelink in the second direction.

The second message may be specifically an RRC connection reconfiguration message or another RRC message. The network device may configure a related parameter of the semi-persistent scheduling of the sidelink for the second network device through an RRC message. Moreover, in this embodiment of this application, the RRC message may further include an RNTI, and the RNTI may be an SL SPS related RNTI or an ordinary RNTI.

In some possible implementations,
the configuration of the semi-persistent scheduling SPS of the sidelink is a period configuration of the semi-persistent scheduling SPS; or
the configuration of the semi-persistent scheduling SPS of the sidelink is a resource configuration of the semi-persistent scheduling SPS.

To be specific, the semi-persistent scheduling configuration of the sidelink may be a period configuration or a resource configuration. The SL SPS resource configuration is allocation of a set of SL SPS resources, the set of SL SPS resources includes one or more sidelink resources, and the first user equipment or the second user equipment may transmit data on an allocated SL SPS resource. In an example, a sidelink control (Sidelink Control, SC) period may be used as a period of a sidelink resource. Herein, the SL SPS resource may be a dedicated resource or a non-dedicated resource.

In some possible implementations, the second information is first sidelink control information SCI, the first SCI further includes indication information, and the indication information is used to indicate the directions of the semi-persistent scheduling SPS of the sidelink.

In some possible implementations,
the second information is second SCI, and the second SCI is used to indicate a resource location of a physical sidelink shared channel sent in the first direction; or
the second information is third SCI, and the third SCI is used to indicate a resource location of a physical sidelink shared channel sent in the second direction.

In some possible implementations, the second information is sidelink control information SCI scrambled by using a second RNTI.

In some possible implementations, the SCI may be scrambled by using a particular SL SPS related RNTI. The particular SL SPS related RNTI may be unique to each second user equipment or may be common to a plurality of second user equipments. When the second user equipment receives the sidelink control information, if the second user equipment successfully descrambles the sidelink control information by using the particular SL SPS related RNTI of the second user equipment, the sidelink control information is used to activate or release the SL SPS of the second user equipment.

In some possible implementations, the sidelink control information SCI may alternatively be sent by using the solution in the prior art. To be specific, the SCI may be not scrambled by using an RNTI. Alternatively, the SCI may be scrambled by using an ordinary RNTI. In this case, the sidelink control information may further include an SPS indication bit. If a value of the SPS indication bit is 1, it indicates that the SCI is SL SPS related SCI; and if a value of the SPS indication bit is 0, it indicates that the SCI is ordinary SCI, that is, dynamically scheduled SCI.

According to a tenth aspect, an embodiment of the present invention provides user equipment, configured to perform the method according to the ninth aspect or any possible implementation of the ninth aspect. Specifically, the user equipment includes modules configured to perform the method according to the ninth aspect or any possible implementation of the ninth aspect.

According to an eleventh aspect, an embodiment of the present invention provides user equipment. The user equipment includes: a memory, a processor, and a transceiver. The memory is configured to store an instruction, the processor is configured to perform the instruction stored in the memory, and when the processor executes the instruction stored in the memory, the execution enables the processor to perform the method according to the ninth aspect or any possible implementation of the ninth aspect.

According to a twelfth aspect, an embodiment of the present invention provides a computer readable medium, configured to store a computer program, and the computer program includes an instruction used to perform the method according to the ninth aspect or any possible implementation of the ninth aspect.

According to a thirteenth aspect, a sidelink scheduling method is provided. The method includes:
receiving, by first user equipment, a first message sent by a network device, where the first message includes a configuration of semi-persistent scheduling SPS of a sidelink of at least one second user equipment connected to the first user equipment; and
sending, by the first user equipment, second information to the at least one second user equipment, where the second information is used to instruct to activate or release the semi-persistent scheduling SPS of the sidelink of the at least one second user equipment.

This embodiment of this application enables the first user equipment and the second user equipment to semi-statically receive or send data on a designated PSSCH, so that the first user equipment and the second user equipment do not need to send a PSCCH each time data is transmitted, to reduce signaling overheads on a sidelink. Moreover, the first user equipment and the second user equipment do not need to transmit or decode the PSCCH, so that power consumption of the first user equipment and the second user equipment can be reduced.

In this embodiment of this application, demodulating, by user equipment, a PSCCH may be understood as obtaining, by the user equipment, control information included in the PSCCH.

To be specific, after sending the first message including the configuration of the semi-persistent scheduling SPS of the sidelink, the network device may not need to resend, to the first user equipment and the second user equipment, information or a message used to instruct to activate or release the semi-persistent scheduling SPS of the sidelink of the second user equipment. While being used to configure the semi-persistent scheduling SPS of the sidelink, the first message may be further used to instruct to activate or release the semi-persistent scheduling SPS of the sidelink of the second user equipment, and after receiving the first message, the first user equipment may send, to the second user equipment, the second message used to activate or release the semi-persistent scheduling SPS of the sidelink of the second user equipment.

Herein, the first message may be specifically an RRC connection reconfiguration message or another RRC message.

In some possible implementations, before the sending, by the first user equipment, second information to the second user equipment, the method further includes:
receiving, by the first user equipment, data of the second user equipment sent by the network device.

In some possible implementations, directions of the semi-persistent scheduling SPS of the sidelink include a first direction and a second direction, and the configuration of the semi-persistent scheduling SPS of the sidelink includes at least one of a configuration of semi-persistent scheduling SPS of the sidelink in the first direction and a configuration of semi-persistent scheduling SPS of the sidelink in the second direction, where
the second user equipment receives, in the first direction, data sent by the first user equipment, and the first user equipment receives, in the second direction, data sent by the second user equipment.

For example, if a value of a first indication bit is 1, it indicates that the SL SPS is to be activated; and if a value of the first indication bit is 0, it indicates that the SL SPS is to be released. If a value of a second indication bit is 1, it indicates that a direction of the SL SPS is the first direction. If a value of the second indication bit is 0, it indicates that a direction of the SL SPS is the second direction.

In some possible implementations, the method further includes:
forwarding, by the first user equipment to the second user equipment, a second message sent by the network device, where the second message includes the configuration of the semi-persistent scheduling SPS of the sidelink of the at least one second user equipment.

In some possible implementations,
the configuration of the semi-persistent scheduling SPS of the sidelink is a period configuration of the semi-persistent scheduling SPS; or
the configuration of the semi-persistent scheduling SPS of the sidelink is a resource configuration of the semi-persistent scheduling SPS.

To be specific, the semi-persistent scheduling configuration of the sidelink may be a period configuration or a resource configuration. The SL SPS resource configuration is allocation of a set of SL SPS resources, the set of SL SPS resources includes one or more sidelink resources, and the first user equipment or the second user equipment may transmit data on an allocated SL SPS resource. In an example, a sidelink control (Sidelink Control, SC) period may be used as a period of a sidelink resource. Herein, the SL SPS resource may be a dedicated resource or a non-dedicated resource.

In some possible implementations, the second information is first sidelink control information, the first sidelink control information further includes indication information, and the indication information is used to indicate the directions of the semi-persistent scheduling SPS of the sidelink.

In some possible implementations, the second information is second sidelink control information, and the second sidelink control information is used to indicate a resource location of a physical sidelink shared channel sent in the first direction; or
the second information is third sidelink control information, and the third sidelink control information is used to indicate a resource location of a physical sidelink shared channel sent in the second direction.

In some possible implementations, the second information is sidelink control information scrambled by using a first radio network temporary identifier RNTI.

In some possible implementations, the SCI may be scrambled by using a particular SL SPS related RNTI. The particular SL SPS related RNTI may be unique to each second user equipment or may be common to a plurality of second user equipments. When the second user equipment receives the sidelink control information, if the second user equipment successfully descrambles the sidelink control information by using the particular SL SPS related RNTI of the second user equipment, the sidelink control information is used to activate or release the SL SPS of the second user equipment.

In some possible implementations, the sidelink control information SCI may alternatively be sent by using the solution in the prior art. To be specific, the SCI may be not scrambled by using an RNTI. Alternatively, the SCI may be scrambled by using an ordinary RNTI. In this case, the sidelink control information may further include an SPS indication bit. If a value of the SPS indication bit is 1, it indicates that the SCI is SL SPS related SCI; and if a value of the SPS indication bit is 0, it indicates that the SCI is ordinary SCI, that is, dynamically scheduled SCI.

In some possible implementations, after the SL SPS in the second direction is activated, and when one or more times of transmission without data occur in the second direction, the first user equipment sends a release indication message to the network device.

In this embodiment of this application, for the SL SPS, the RRC message sent by the network device to the first user equipment may include configuration control information, and the control information may be an integer n, indicating that the release indication message is sent after n times of transmission without data occur in the PSSCH of the SL SPS. To be specific, the SL SPS is released by default.

According to a fourteenth aspect, an embodiment of the present invention provides user equipment, configured to perform the method according to the thirteenth aspect or any possible implementation of the thirteenth aspect. Specifically, the user equipment includes modules configured to perform the method according to the thirteenth aspect or any possible implementation of the thirteenth aspect.

According to a fifteenth aspect, an embodiment of the present invention provides user equipment. The user equipment includes: a memory, a processor, and a transceiver. The memory is configured to store an instruction, the processor is configured to perform the instruction stored in the memory, and when the processor executes the instruction stored in the memory, the execution enables the processor to perform the method according to the thirteenth aspect or any possible implementation of the thirteenth aspect.

According to a sixteenth aspect, an embodiment of the present invention provides a computer readable medium, configured to store a computer program, and the computer program includes an instruction used to perform the method according to the thirteenth aspect or any possible implementation of the thirteenth aspect.

According to a seventeenth aspect, a sidelink scheduling method is provided. The method includes:
sending, by a network device, a first message to first user equipment, where the first message includes a configuration of semi-persistent scheduling SPS of a sidelink of at least one second user equipment connected to the first user equipment.

This embodiment of this application enables the first user equipment and the second user equipment to semi-statically receive or send data on a designated PSSCH, so that the first user equipment and the second user equipment do not need to send a PSCCH each time data is transmitted, to reduce signaling overheads on a sidelink. Moreover, the first user equipment and the second user equipment do not need to transmit or decode the PSCCH, so that power consumption of the first user equipment and the second user equipment can be reduced.

In this embodiment of this application, demodulating, by user equipment, a PSCCH may be understood as obtaining, by the user equipment, control information included in the PSCCH.

To be specific, after sending the first message including the configuration of the semi-persistent scheduling SPS of the sidelink, the network device may not need to resend, to the first user equipment and the second user equipment, information or a message used to instruct to activate or release the semi-persistent scheduling SPS of the sidelink of the second user equipment. While being used to configure the semi-persistent scheduling SPS of the sidelink, the first message may be further used to instruct to activate or release the semi-persistent scheduling SPS of the sidelink of the second user equipment, and after receiving the first message, the first user equipment may send, to the second user equipment, the second message used to activate or release the semi-persistent scheduling SPS of the sidelink of the second user equipment.

Herein, the first message may be specifically an RRC connection reconfiguration message or another RRC message.

In some possible implementations, the method further includes:
sending, by the network device, data of the second user equipment to the first user equipment.

In some possible implementations, directions of the semi-persistent scheduling SPS of the sidelink include a first direction and a second direction, and the configuration of the semi-persistent scheduling SPS of the sidelink includes at least one of a configuration of semi-persistent scheduling SPS of the sidelink in the first direction and a configuration of semi-persistent scheduling SPS of the sidelink in the second direction, where
the second user equipment receives, in the first direction, data sent by the first user equipment, and the first user equipment receives, in the second direction, data sent by the second user equipment.

For example, if a value of a first indication bit is 1, it indicates that the SL SPS is to be activated; and if a value of the first indication bit is 0, it indicates that the SL SPS is to be released. If a value of a second indication bit is 1, it indicates that a direction of the SL SPS is the first direction. If a value of the second indication bit is 0, it indicates that a direction of the SL SPS is the second direction.

In some possible implementations, the method further includes:
sending, by the network device, a second message to the first user equipment, where the second message includes the configuration of the semi-persistent scheduling SPS of the sidelink of the at least one second user equipment.

In some possible implementations,
the configuration of the semi-persistent scheduling SPS of the sidelink is a period configuration of the semi-persistent scheduling SPS; or
the configuration of the semi-persistent scheduling SPS of the sidelink is a resource configuration of the semi-persistent scheduling SPS.

To be specific, the semi-persistent scheduling configuration of the sidelink may be a period configuration or a resource configuration. The SL SPS resource configuration is allocation of a set of SL SPS resources, the set of SL SPS resources includes one or more sidelink resources, and the first user equipment or the second user equipment may transmit data on an allocated SL SPS resource. In an example, a sidelink control (Sidelink Control, SC) period may be used as a period of a sidelink resource. Herein, the SL SPS resource may be a dedicated resource or a non-dedicated resource.

In some possible implementations, the RRC message sent by the network device to the first user equipment may include configuration control information, and the control information may be an integer n, indicating that the release indication message is sent after n times of transmission without data occur in the PSSCH of the SL SPS. After the network device receives the release indication message sent by the first user equipment, the network device releases the SL SPS by default.

According to an eighteenth aspect, an embodiment of the present invention provides a network device, configured to perform the method according to the seventeenth aspect or any possible implementation of the seventeenth aspect. Specifically, the user equipment includes modules configured to perform the method according to the seventeenth aspect or any possible implementation of the seventeenth aspect.

According to a nineteenth aspect, an embodiment of the present invention provides a network device. The network device includes: a memory, a processor, and a transceiver. The memory is configured to store an instruction, the processor is configured to perform the instruction stored in the memory, and when the processor executes the instruction stored in the memory, the execution enables the processor to perform the method according to the seventeenth aspect or any possible implementation of the seventeenth aspect.

According to a twentieth aspect, an embodiment of the present invention provides a computer readable medium, configured to store a computer program, and the computer program includes an instruction used to perform the method according to the seventeenth aspect or any possible implementation of the seventeenth aspect.

According to a twenty first aspect, a sidelink scheduling method is provided. The method includes:
receiving, by second user equipment, second information sent by first user equipment, where the second information is used to instruct to activate or release semi-persistent scheduling SPS of a sidelink of the second user equipment.

This embodiment of this application enables the first user equipment and the second user equipment to semi-statically receive or send data on a designated PSSCH, so that the first user equipment and the second user equipment do not need to send a PSCCH each time data is transmitted, to reduce signaling overheads on a sidelink. Moreover, the first user equipment and the second user equipment do not need to transmit or decode the PSCCH, so that power consumption of the first user equipment and the second user equipment can be reduced.

In this embodiment of this application, demodulating, by user equipment, a PSCCH may be understood as obtaining, by the user equipment, control information included in the PSCCH.

In some possible implementations, directions of the semi-persistent scheduling SPS of the sidelink include a first direction and a second direction, and the configuration of the semi-persistent scheduling SPS of the sidelink includes at least one of a configuration of semi-persistent scheduling SPS of the sidelink in the first direction and a configuration of semi-persistent scheduling SPS of the sidelink in the second direction, where
the second user equipment receives, in the first direction, data sent by the first user equipment, and the first user equipment receives, in the second direction, data sent by the second user equipment.

In some possible implementations, the method further includes:
receiving, by the second user equipment, a second message that is sent by the network device and that is forwarded by the first user equipment, where the second message includes a configuration of the semi-persistent scheduling SPS of the sidelink of the second user equipment.

In some possible implementations,
the configuration of the semi-persistent scheduling SPS of the sidelink is a period configuration of the semi-persistent scheduling SPS; or
the configuration of the semi-persistent scheduling SPS of the sidelink is a resource configuration of the semi-persistent scheduling SPS.

To be specific, the semi-persistent scheduling configuration of the sidelink may be a period configuration or a resource configuration. The SL SPS resource configuration is allocation of a set of SL SPS resources, the set of SL SPS resources includes one or more sidelink resources, and the first user equipment or the second user equipment may transmit data on an allocated SL SPS resource. In an example, a sidelink control (Sidelink Control, SC) period may be used as a period of a sidelink resource. Herein, the SL SPS resource may be a dedicated resource or a non-dedicated resource.

In some possible implementations, the second information is first sidelink control information, the first sidelink control information further includes indication information, and the indication information is used to indicate the directions of the semi-persistent scheduling SPS of the sidelink.

In some possible implementations, the second information is second sidelink control information, and the second sidelink control information is used to indicate a resource location of a physical sidelink shared channel sent in the first direction; or
the second information is third sidelink control information, and the third sidelink control information is used to indicate a resource location of a physical sidelink shared channel sent in the second direction.

In some possible implementations, the second information is sidelink control information scrambled by using a second radio network temporary identifier RNTI.

In some possible implementations, the SCI may be scrambled by using a particular SL SPS related RNTI. The particular SL SPS related RNTI may be unique to each second user equipment or may be common to a plurality of second user equipments. When the second user equipment receives the sidelink control information, if the second user equipment successfully descrambles the sidelink control information by using the particular SL SPS related RNTI of the second user equipment, the sidelink control information is used to activate or release the SL SPS of the second user equipment.

In some possible implementations, the sidelink control information SCI may alternatively be sent by using the solution in the prior art. To be specific, the SCI may be not scrambled by using an RNTI. Alternatively, the SCI may be scrambled by using an ordinary RNTI. In this case, the sidelink control information may further include an SPS indication bit. If a value of the SPS indication bit is 1, it indicates that the SCI is SL SPS related SCI; and if a value of the SPS indication bit is 0, it indicates that the SCI is ordinary SCI, that is, dynamically scheduled SCI.

According to a twenty second aspect, an embodiment of the present invention provides user equipment, configured to perform the method according to the twenty first aspect or any possible implementation of the twenty first aspect. Specifically, the user equipment includes modules configured to perform the method according to the twenty first aspect or any possible implementation of the twenty first aspect.

According to a twenty third aspect, an embodiment of the present invention provides user equipment. The user equipment includes: a memory, a processor, and a transceiver. The memory is configured to store an instruction, the processor is configured to perform the instruction stored in the memory, and when the processor executes the instruction stored in the memory, the execution enables the processor to perform the method according to the twenty first aspect or any possible implementation of the twenty first aspect.

According to a twenty fourth aspect, an embodiment of the present invention provides a computer readable medium, configured to store a computer program, and the computer program includes an instruction used to perform the method according to the twenty first aspect or any possible implementation of the twenty first aspect.

### BRIEF DESCRIPTION OF DRAWINGS

FIG. 1(a) is a system architecture diagram of a semi-persistent scheduling method according to an embodiment of this application;
FIG. 1(b) is another system architecture diagram of a semi-persistent scheduling method according to an embodiment of this application;
FIG. 2(a) is a schematic flowchart of a semi-persistent scheduling method;
FIG. 2(b) is a schematic flowchart of a semi-persistent scheduling method;
FIG. 3 is a schematic flowchart of a semi-persistent scheduling method according to an embodiment of this application;
FIG. 4 is a schematic flowchart of another semi-persistent scheduling method according to an embodiment of this application;
FIG. 5 is a schematic flowchart of another semi-persistent scheduling method according to an embodiment of this application;
FIG. 6 is a schematic flowchart of another semi-persistent scheduling method according to an embodiment of this application;
FIG. 7 is a schematic flowchart of another semi-persistent scheduling method according to an embodiment of this application;
FIG. 8 is a schematic block diagram of a device according to an embodiment of this application;
FIG. 9 is a schematic block diagram of another device according to an embodiment of this application;
FIG. 10 is a schematic block diagram of a network device according to an embodiment of this application;
FIG. 11 is a schematic block diagram of another network device according to an embodiment of this application;
FIG. 12 is a schematic block diagram of another device according to an embodiment of this application;
FIG. 13 is a schematic block diagram of another device according to an embodiment of this application;
FIG. 14 is a schematic block diagram of another device according to an embodiment of this application;
FIG. 15 is a schematic block diagram of another device according to an embodiment of this application;
FIG. 16 is a schematic block diagram of another network device according to an embodiment of this application;
FIG. 17 is a schematic block diagram of another network device according to an embodiment of this application;
FIG. 18 is a schematic block diagram of another device according to an embodiment of this application; and
FIG. 19 is a schematic block diagram of another device according to an embodiment of this application.

### DESCRIPTION OF EMBODIMENTS

The following describes the technical solutions in this application with reference to the accompanying drawings.

User equipment in embodiments of this application may be a terminal device, an access terminal, a subscriber unit, a subscriber station, a mobile station, a mobile station, a remote station, a remote terminal, a mobile device, a user terminal, a terminal, a wireless communications device, a user agent, a user apparatus, or the like. The access terminal may be a cellular phone, a cordless phone, a session initiation protocol (Session Initiation Protocol, SIP) phone, a wireless local loop (Wireless Local Loop, WLL) station, a personal digital assistant (Personal Digital Assistant, PDA), a handheld device having a wireless communication function, a computing device, another processing device connected to a wireless modem, a vehicle-mounted device, a wearable device, a terminal in a 5G network, or the like.

A network device in the embodiments of this application is a network side device performing wireless communication with the terminal device, for example, a wireless-fidelity (Wireless-Fidelity, Wi-Fi) access point, a base station, or a next generation communications base station such as a gNB or a small cell in 5G, a micro cell, or a transmission reception point (transmission reception point, TRP), and may further be a relay station, an access point, a vehicle-mounted device, a wearable device, or the like.

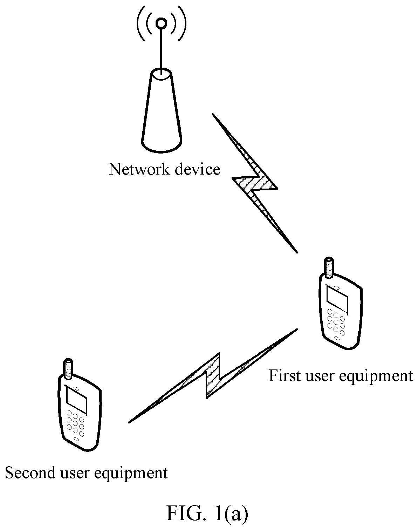

FIG. 1(a) is a schematic architecture diagram in a UE-to-network relay scenario. In the application scenario shown in FIG. 1(a), a first device may be first user equipment, and a second device may be second user equipment. A link between the network device and the first device and a link between the network device and the second device may be referred to as a cellular link or an uplink/downlink, and a link between the first device and the second device may be referred to as a sidelink. A signal may be transmitted between the first device and the second device through the sidelink.

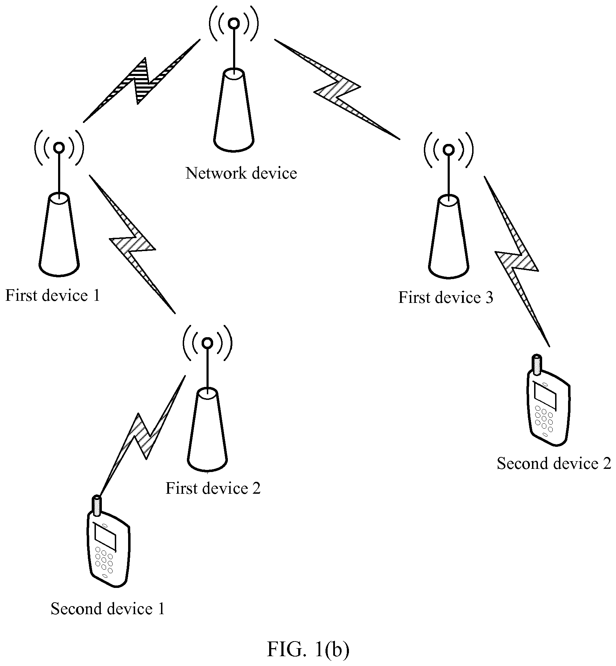

A semi-persistent scheduling method provided in this embodiment of this application may be further applied to a scenario in which the second device is connected to the network device through the first device, such as an integrated access and backhaul (Integrated Access and Backhaul) scenario. FIG. 1(b) is a schematic architecture diagram in an Integrated Access and Backhaul scenario. In the application scenario shown in FIG. 1(b), the first device may be a relay node (Relay node), a transmission reception point (transmission reception point, TRP), a relay transmission reception point (relay transmission reception point, rTRP), or a network device. The second device may be user equipment, a terminal device, an access terminal, a subscriber unit, a subscriber station, a mobile station, a mobile station, a remote station, a remote terminal, a mobile device, a user terminal, a terminal, a wireless communications device, a user agent, a user apparatus, or the like. The network device may be a radio access network (radio access network, RAN) device (or node), or a base station. Currently, some examples of the RAN node are: a next generation NodeB (gNB), a transmission reception point (transmission reception point, TRP), a donor transmission reception point or home transmission reception point (donor transmission reception point, donor TRP), an anchor transmission reception point (anchor transmission reception point, anchor TRP), an evolved NodeB (evolved NodeB, eNB), a radio network controller (radio network controller, RNC), a NodeB (NodeB, NB), a base station controller (base station controller, BSC), a base transceiver station (base transceiver station, BTS), a home NodeB (for example, home evolved NodeB or home NodeB, HNB), a baseband unit (baseband unit, BBU), and a wireless-fidelity (wireless-fidelity, Wi-Fi) access point (access point, AP). The second device may be a terminal communicating with the network device through the first device, and the network device may be directly connected to a core network. The first device may be connected to the network device in a wireless manner, and the first device may be further connected to the network device through at least one other first device. A link between the first device and the network device may be referred to as a backhaul link (backhaul link). A link between the first device and the second device may be referred to as an access link (access link). In this scenario, a semi-persistent scheduling method provided in this embodiment of this application is similar to that in the UE-to-network relay scenario. The semi-persistent scheduling method may be an uplink/downlink scheduling method, the following first user equipment may be replaced with the first device, and the following second user equipment may be replaced with the second device. To be specific, the first device performs a step of the first user equipment, and the second device performs a step of the second user equipment. A sidelink between the first user equipment and the second user equipment is replaced with an uplink or a downlink between the first device and the second device, a physical sidelink control channel (Physical Sidelink Control Channel, PSCCH) is replaced with a physical downlink control channel (Physical Downlink Control Channel, PDCCH), a physical sidelink shared channel (Physical Sidelink Shared Channel, PSSCH) is replaced with a physical downlink shared channel (Physical Downlink Shared Channel, PDSCH), and sidelink control information (Sidelink Control Information, SCI) is replaced with downlink control information (Downlink Control Information, DCI).

In a long term evolution (Long Term Evolution, LTE) technology, a base station configures SPS for UE through a radio resource control (Radio Resource Control, RRC) message, where the SPS includes downlink SPS and uplink SPS. The UE sends data to the base station in an uplink SPS direction, and the base station sends data to the UE in a downlink direction. The RRC message for configuring the SPS includes SPS related parameters such as an SPS cell-radio network temporary identifier (SPS Cell-Radio Network Temporary Identity, SPS C-RNTI), an uplink SPS period, and a downlink SPS period.

After the base station configures the SPS, the base station may activate (release) the configured SPS through downlink control information (Downlink Control Information, DCI) scrambled by using the SPS C-RNTI. The DCI is carried on a physical downlink control channel (Physical Downlink Control Channel, PDCCH), and some fields in a DCI format are set to corresponding values. Only after being activated, the configured SPS may be used. It should be noted that, in this embodiment of this application, that the downlink control information is scrambled by using an RNTI means that a cyclic redundancy check (Cyclic Redundancy Check, CRC) of the downlink control information is scrambled by using the RNTI.

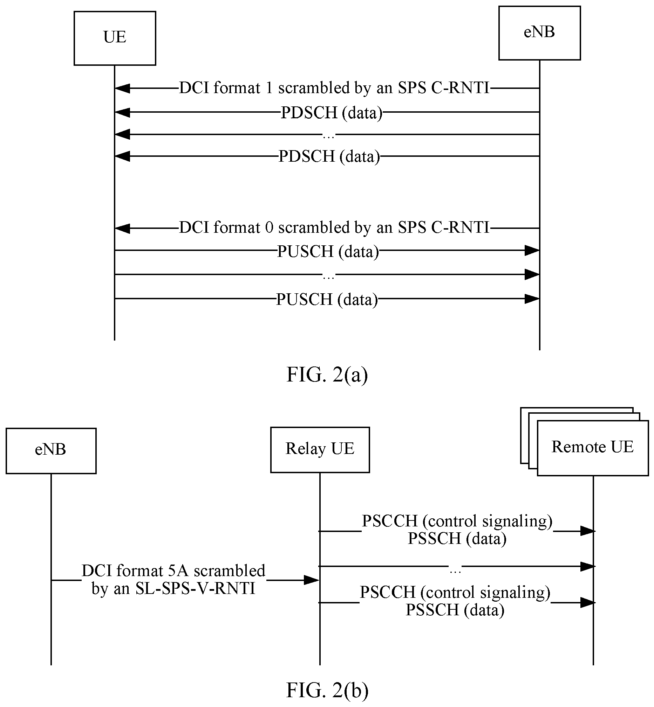

For example, as shown in FIG. 2(a), when UE receives a DCI format 1 scrambled by using an SPS C-RNTI, corresponding downlink SPS is activated (released). When the downlink SPS is activated, the UE needs to receive downlink data on a designated physical downlink shared channel (Physical Downlink Shared Channel, PDSCH) only every downlink SPS period, and does not need to again receive the DCI format 1 used to schedule the PDSCH. When the UE receives a DCI format 0 scrambled by using the SPS C-RNTI, corresponding uplink SPS is activated (released). When the uplink SPS is activated, the UE needs to send uplink data on a designated physical uplink shared channel (Physical Uplink Shared Channel, PUSCH) only every uplink SPS period, and does not need to again receive the DCI format 0 used to schedule the PUSCH, thereby reducing signaling overheads on an air interface.

The solution can support only uplink SPS or downlink SPS, and cannot support SPS on a sidelink. To be specific, data cannot be sent or received between relay UE and remote UE through SPS.

In a V2X service, sidelink SPS is introduced. Abase station configures the sidelink SPS for the relay UE through an RRC message, and the RRC message for configuring the sidelink SPS includes SPS related parameters such as a sidelink SPS V2X-radio network temporary identifier (Sidelink SPS V2X-Radio Network Temporary Identity, SL-SPS-V-RNTI), an index (index) of a configuration, and a corresponding sidelink SPS period.

As shown in FIG. 2(b), after a base station configures sidelink SPS, the base station may activate (release) the configured sidelink SPS through a DCI format 5A scrambled by using an SL-SPS-V-RNTI, and relay UE needs to send control signaling and data (the sending is mainly broadcasting) on a designated physical sidelink control channel (Physical Sidelink Control Channel, PSCCH) and physical sidelink shared channel (Physical Sidelink Shared Channel, PSSCH) only every sidelink SPS period, and does not need to again receive the DCI format 5A used to schedule a sidelink, thereby reducing signaling overheads on a cellular link when the relay UE forwards, to remote UE, data sent by the base station.

In the solution, sidelink SPS needs to be configured for only the relay UE, to mainly reduce the signaling overheads on the cellular link when the relay UE forwards, to the remote UE, the data sent by the base station, and on the sidelink, the relay UE still needs to periodically send the PSCCH and the PSSCH, and signaling overheads on the sidelink are not reduced. Additionally, the remote UE does not perceive the sidelink SPS, and still receives data in an existing manner of detecting all PSCCHs and demodulating the PSCCHs, and behaviors and power consumption of the remote UE are not changed. In this embodiment of this application, demodulating, by user equipment, a PSCCH may be understood as obtaining, by the user equipment, control information included in the PSCCH.

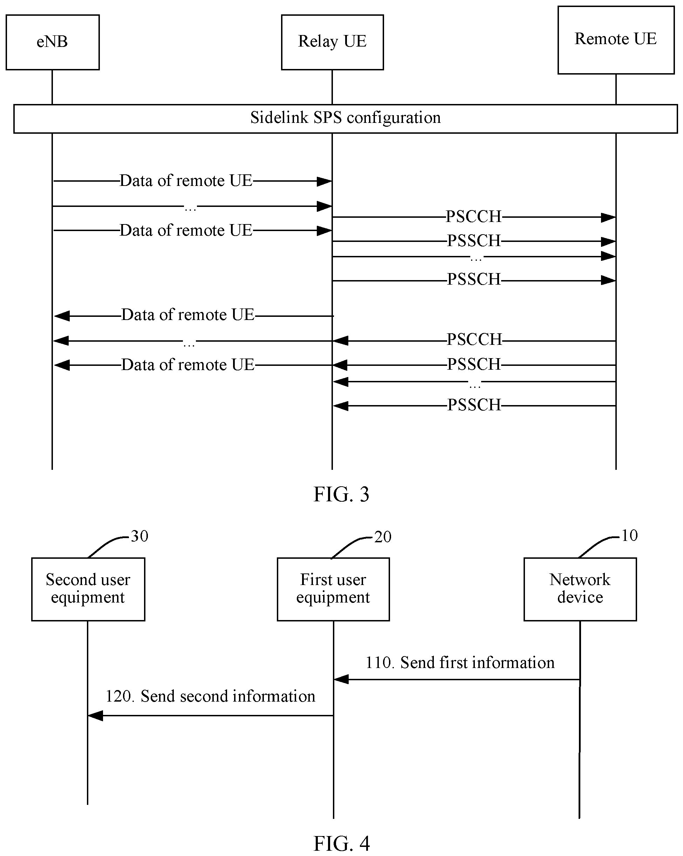

As shown in FIG. 3, in an embodiment of this application, sidelink SPS is configured for relay UE and remote UE in a pair in a UE-to-network relay scenario. When the SL SPS of the relay UE and the remote UE in a pair is activated by a PSCCH, the relay UE may semi-statically send data to the remote UE on a designated PSSCH or receive, on a designated PSSCH, data sent by the remote UE and does not need to resend the PSCCH. Similarly, the remote UE may also semi-statically send data to the relay UE on a designated PSSCH or receive, on a designated PSSCH, data sent by the relay UE and does not need to resend the PSCCH.

FIG. 4 is a schematic flowchart of a sidelink scheduling method according to an embodiment of this application. The method includes the following steps.

110. A network device 10 sends first information to first user equipment 20. The first information is used to instruct to activate or release sidelink SL semi-persistent scheduling SPS of second user equipment 30.

120. The first user equipment 20 sends second information to the second user equipment 30. The second information is used to instruct to activate or release the sidelink SL semi-persistent scheduling SPS of the second user equipment.

In this embodiment of this application, the network device 10 may be the base station described above, the first user equipment 20 may be the relay UE (relay UE) described above, and the second user equipment 30 may be the remote UE (remote UE) described above.

Specifically, the first information may include a first indication bit used to instruct to activate the SL SPS or release the SL SPS. The second information may also include the first indication bit used to instruct to activate the SL SPS or release the SL SPS.

In this embodiment of this application, the SL SPS includes SL SPS in a first direction and SL SPS in a second direction. The second user equipment receives, in the first direction, data sent by the first user equipment. To be specific, the first user equipment sends data (the second user equipment receives the data) in the first direction. The first user equipment receives, in the second direction, data sent by the second user equipment. To be specific, the second user equipment sends data (the first user equipment receives the data) in the second direction. In this case, the first information may further include a second indication bit used to indicate an SL SPS direction, and the second information may also further include the second indication bit used to indicate an SL SPS direction.

For example, if a value of a first indication bit is 1, it indicates that the SL SPS is to be activated; and if a value of the first indication bit is 0, it indicates that the SL SPS is to be released. If a value of a second indication bit is 1, it indicates that a direction of the SL SPS is the first direction. If a value of the second indication bit is 0, it indicates that a direction of the SL SPS is the second direction.

Through steps 110 and 120, this embodiment of this application enables the first user equipment 20 and the second user equipment 30 to semi-statically receive or send data on a designated PSSCH, so that the first user equipment 20 and the second user equipment 30 do not need to send a PSCCH each time data is transmitted, to reduce signaling overheads on a sidelink. Moreover, the first user equipment 20 and the second user equipment 30 do not need to transmit or decode the PSCCH, so that power consumption of the first user equipment 20 and the second user equipment 30 can be reduced.

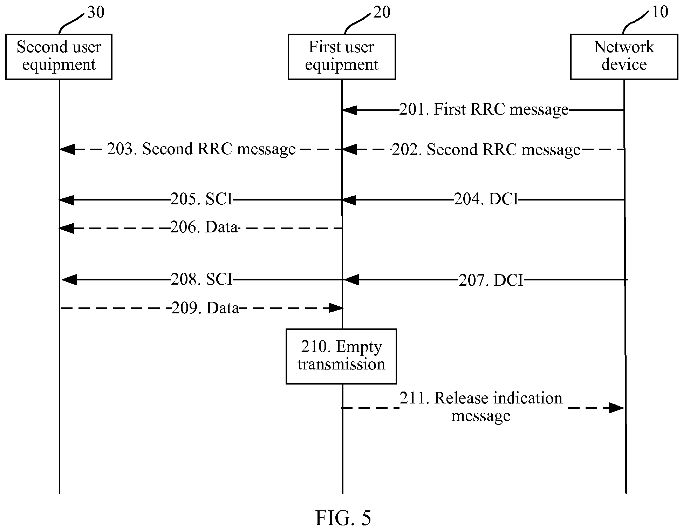

FIG. 5 is a schematic interaction flowchart of a sidelink scheduling method according to an embodiment of this application. It should be understood that, FIG. 5 shows steps or operations of a sidelink scheduling method, but these steps or operations are only an example. In this embodiment of this application, other operations or variants of the operations in FIG. 5 may be further performed. In addition, the steps in FIG. 5 may be performed in a sequence that is different from a sequence shown in FIG. 5, and may be not all operations in FIG. 5 need to be performed. A same reference number in FIG. 5 and FIG. 4 indicates a same meaning. The method shown in FIG. 5 includes the following steps.

201. A network device 10 sends a first RRC message to first user equipment 20.

In this embodiment of this application, the first RRC message may be specifically an RRC connection reconfiguration message or another RRC message. This is not limited in this embodiment of the present invention.

Specifically, before the network device 10 sends first information to the first user equipment 20, the network device 10 may configure sidelink SL semi-persistent scheduling SPS of the first user equipment 20 and second user equipment 30 in a pair through an RRC message. For example, the network device 10 may send the first RRC message to the first network device 20, and the first RRC message may include configurations of SL SPS of one or more second user equipments connected to the first user equipment.

Herein, the configuration of the SL SPS includes at least one of a configuration of the SL SPS in a first direction and a configuration of the SL SPS in a second direction. It can be understood that, in this embodiment of the present invention, the configuration of the SL SPS in the first direction and the configuration of the SL SPS in the second direction may be configured based on a specific service requirement between the first user equipment and the second user equipment. Specifically, the configuration of the SL SPS in the first direction and the configuration of the SL SPS in the second direction may be different or the same. This is not limited in this embodiment of this application. In a possible implementation, when the configuration of the SL SPS in the first direction is the same as that in the second direction, the RRC connection reconfiguration message may not indicate an SL SPS direction.

The first RRC message may further include an identifier of the second user equipment, an index (index) of a configuration, and a configuration corresponding to the SL SPS.

Relay UE has a plurality of periodic services on a sidelink, and a plurality of types of different periodic SPS need to be configured to adapt to different periodic services. Therefore, different from uplink SPS and downlink SPS, in sidelink SPS, a plurality of types of periodic SPS may be configured for the relay UE, a maximum of eight SPS periods may be configured, each period is indicated by an index value, a maximum of eight index values are required, and indexes occupy three bits in total. When activating (releasing) sidelink SPS of the relay UE, the base station further needs to activate (release) sidelink SPS of a period that is indicated through an index value. In an example, the first RRC message may include identifiers of one or more second user equipments and a configuration of SL SPS corresponding to each second user equipment. Herein, the identifiers of the second user equipments are, for example, local identifiers (Local ID) of the second user equipments, and the identifiers of the second user equipments may be used to distinguish the second user equipments.

In another example, the first RRC message may not include the identifiers of the second user equipments. In this case, configurations of SL SPS of one or more second user equipments may be set in the first RRC message in a pre-agreed order. In this way, when receiving the first RRC message, the second user equipments can determine respective configurations of SL SPS in the pre-agreed order.

In some possible implementations, the configuration of the SL SPS may include a period configuration or a resource configuration of the SL SPS. The SL SPS resource configuration is allocation of a set of SL SPS resources, the set of SL SPS resources includes one or more sidelink resources, and the first user equipment or the second user equipment may transmit data on an allocated SL SPS resource. In an example, a sidelink control (Sidelink Control, SC) period may be used as a period of a sidelink resource. The sidelink resource control period may be used as an SL SPS period, and an SL SPS period does not need to be configured again. If a resource set is configured by using a sidelink control period as a period, the resource set periodically occurs. The sidelink resource may be further configured in another form. For example, if an SL control resource and an SL data resource occur in a same subframe, the SL SPS resource may still be configured. Herein, for the configuration of the SL SPS resource, an LS SPS resource location may be configured through a bitmap or configured in another manner. This is not limited in this embodiment of this application.

Herein, the SL SPS resource may be a dedicated resource. To be specific, the SL SPS resource is used by only the first user equipment and the second user equipment in a pair, and other user equipments do not reuse the resource to cause interference. Alternatively, the SL SPS resource may be a non-dedicated resource. To be specific, the SL SPS resource is not used by only the first user equipment and the second user equipment in a pair, other user equipments also reuse the resource, and interference may be caused.

It should be noted that, SL SPS resources allocated by the network device to the first user equipment may correspond to SL SPS resources of a plurality of second user equipments, for example, may be SL SPS resources of a plurality of second user equipments having a same period. In this case, SL SPS dedicated resources may be a resource pool, the resource pool may be a dedicated resource pool or a non-dedicated resource pool, and the first user equipment may select a resource from the SL SPS resource pool to be used by one of the second user equipments. After a resource is selected, the first user equipment and the second user equipment can perform sidelink semi-persistent scheduling SL SPS by using only the particular resource.

In this embodiment of this application, the first RRC message may further include a radio network temporary identifier (Radio Network Temporary Identity, RNTI), and the RNTI may be used to scramble downlink control information. For example, the RNTI may be an RNTI corresponding to the first user equipment, or an RNTI corresponding to at least one second user equipment. Herein, the RNTI may be an SL SPS related RNTI or an ordinary RNTI.

202. The network device 10 sends a second RRC message to the first user equipment 20.

203. The first user equipment 20 sends the second RRC message to the second user equipment 30.

Herein, the second RRC message may be specifically an RRC connection reconfiguration message or another RRC message. This is not limited in this embodiment of the present invention.

In steps 202 and 203, the network device configures SL SPS for the second user equipment through the first user equipment. For example, the network device may send the second RRC message to the first user equipment, and the first user equipment forwards the second RRC message to the second user equipment.

The second RRC message includes the configuration of the SL SPS of the second user equipment. Moreover, the configuration of the SL SPS includes at least one of the configuration in the first direction and the configuration in the second direction. The configuration of the SL SPS includes a period configuration or a resource configuration of the SL SPS. For the first direction, the second direction, the period configuration, and the resource configuration, refer to the descriptions in FIG. 4 and 201 in FIG. 5.

In this embodiment of this application, the second RRC message may further include a radio network temporary identifier (Radio Network Temporary Identity, RNTI), and the RNTI may be used to scramble a sidelink control message. The RNTI may be an SL SPS related RNTI of at least one second user equipment or an ordinary RNTI. It should be noted that, in this embodiment of this application, that the sidelink control information is scrambled by using an RNTI means that a CRC of the sidelink control information is scrambled by using the RNTI.

It should be noted that, when the configuration of the SL SPS included in the first RRC message is a resource configuration of the SL SPS, the network device may not need to send the second RRC message to the second user equipment to configure SL SPS. To be specific, steps 202 and 203 may not exist.

204. The network device 10 sends downlink control information DCI to the first user equipment 20.

Herein, the DCI is the first information described in 110 in FIG. 4. The DCI may be used to instruct to activate or release semi-persistent scheduling SPS of a sidelink of the second user equipment. The DCI may include a first indication bit used to instruct to activate SL SPS or release SL SPS and/or a second indication bit used to indicate an SL SPS direction. For the first indication bit and the second indication bit, refer to the description in FIG. 4.

Specifically, the DCI may include all or some information in a DCI format 5. The DCI format 5 is used to allocate sidelink resources that may include a resource of a PSCCH, transmit power control signaling of the PSCCH and a PSSCH, and fields of an SCI format 0, where the fields of the SCI format 0 include a frequency modulation identifier, resource block allocation, frequency modulation resource allocation, and a time domain resource mode.

In this embodiment of this application, the DCI may be scrambled by using a particular SL SPS related RNTI.

In a possible implementation, the particular SL SPS related RNTI may be an RNTI corresponding to at least one second user equipment connected to the first user equipment. Specifically, the network device may allocate a particular SL SPS related RNTI to one or more second user equipments connected to the first user equipment, add the RNTI in an RRC message, and send the RRC message to the first user equipment, for example, may send the RNTI to the first user equipment through the first RRC message in 201.

When the first user equipment receives the DCI, the first user equipment descrambles the DCI by using all RNTIs of the first user equipment and second user equipments connected to the first user equipment. If the DCI is descrambled successfully by using a particular SL SPS related RNTI of some second user equipment, the DCI is used to activate or release the SL SPS of the second user equipment.

In another possible implementation, the particular SL SPS related RNTI is an RNTI corresponding to the first user equipment, and the DCI further includes an identifier of the second user equipment. Specifically, the network device may allocate a common SL SPS related RNTI to the first user equipment, and the common SL SPS related RNTI may be an SL SPS related RNTI allocated to each first user equipment or an SL SPS related RNTI allocated to a plurality of or all first user equipments.

To be specific, the DCI may be scrambled by using the RNTI of the first user equipment. In this case, the DCI further includes the identifier of the second user equipment. When the first user equipment receives the DCI, and after the first user equipment successfully descrambles the downlink control information by using an SL SPS related RNTI of the first user equipment, the first user equipment may obtain the identifier of the second user equipment, and then the first user equipment may determine to activate or release the SL SPS of the second user equipment.

In another possible implementation, the DCI may be scrambled by using an ordinary RNTI. To be specific, the DCI may alternatively be not scrambled by using an SL SPS related RNTI in this embodiment of this application. In this case, the DCI may further include an SPS indication bit. If a value of the SPS indication bit is 1, it indicates that the DCI is SL SPS related DCI; and if a value of the SPS indication bit is 0, it indicates that the DCI is ordinary DCI, that is, dynamically scheduled DCI.

205. The first user equipment 20 sends sidelink control information SCI to the second user equipment 30.

Specifically, the first user equipment may send the SCI to the second user equipment based on the received first information such as the DCI in 204. Herein, the SCI may be the second information in 120 in FIG. 4. The SCI may be used to instruct to activate or release semi-persistent scheduling SPS of a sidelink of the second user equipment.

Specifically, the SCI may include all or some information in an SCI format 0. The SCI format 0 is used to indicate resources of a PSSCH, including an indication frequency modulation identifier, resource block allocation and frequency hopping resource allocation, a time-frequency domain resource mode, a modulation and coding scheme, a timing advance indication, a target group address, and the like.

In a possible implementation, the sidelink control information SCI may be first sidelink control information SCI, the first SCI further includes indication information, and the indication information is used to indicate the directions of the semi-persistent scheduling SPS of the sidelink. Specifically, the first SCI includes a first indication bit used to instruct to activate SL SPS or release SL SPS and/or a second indication bit used to indicate an SL SPS direction. For the first indication bit and the second indication bit, refer to the description in FIG. 4.

In another possible implementation, the sidelink control information SCI may be second SCI, and the second SCI is used to indicate a resource location of a physical sidelink shared channel sent in the first direction; or the sidelink control information SCI is third SCI, and the third SCI is used to indicate a resource location of a physical sidelink shared channel sent in the second direction. To be specific, different formats of SCI may be sent in different SL SPS directions. In this way, the second SCI or the third SCI may not include the second indication bit used to indicate an SPS direction.

Specifically, a resource indicated by the second SCI may be used by a transmit end sending the SCI. To be specific, the second SCI indicates a resource location of the PSSCH sent by the first user equipment to the second user equipment. After the first user equipment sends the second SCI to the second user equipment, the first user equipment may send data to the second user equipment. A resource indicated by the third SCI may be used by a receive end receiving the SCI. To be specific, the third SCI indicates a resource location of the PSSCH sent by the second user equipment to the first user equipment. After the first user equipment sends the second SCI to the second user equipment, that is, after the second user equipment receives the third SCI, the second user equipment may send data to the first user equipment.

In a possible implementation, the SCI may be scrambled by using a particular SL SPS related RNTI. The particular SL SPS related RNTI may be unique to each second user equipment or may be common to a plurality of second user equipments. For example, a plurality of second user equipments connected to a same first user equipment have a unique SL SPS related RNTI, a plurality of second user equipments connected to a same first user equipment may share a particular SL SPS related RNTI, or a plurality of second user equipments connected to different first user equipments may share a particular SL SPS related RNTI.

Specifically, the network device may allocate a particular SL SPS related RNTI to one or more second user equipments, add the RNTI in an RRC message, and send the RRC message to the first user equipment, and then the first user equipment forwards the RRC message carrying the RNTI to the second user equipment. For example, the RNTI may be sent to the first user equipment and the second user equipment through the second RRC message in 202 and 203.

When the second user equipment receives the sidelink control information, if the second user equipment successfully descrambles the sidelink control information by using the particular SL SPS related RNTI of the second user equipment, the sidelink control information is used to activate or release the SL SPS of the second user equipment.

In some possible implementations, the sidelink control information SCI may alternatively be sent by using the solution in the prior art. To be specific, the SCI may be not scrambled by using an RNTI. Alternatively, the SCI may be scrambled by using an ordinary RNTI. In this case, the sidelink control information may further include an SPS indication bit. If a value of the SPS indication bit is 1, it indicates that the SCI is SL SPS related SCI; and if a value of the SPS indication bit is 0, it indicates that the SCI is ordinary SCI, that is, dynamically scheduled SCI.

206. The first user equipment 20 sends data to the second user equipment 30.

Specifically, when the DCI sent by the network device to the first user equipment instructs to activate SL SPS in the first direction, the SCI sent by the first user equipment to the second user equipment is the first SCI, indication information of the first SCI indicates that a direction of the SL SPS is the first direction, and the first user equipment sends data to the second user equipment. Alternatively, the SCI sent by the first user equipment to the second user equipment is the second SCI, and the first user equipment sends data to the second user equipment.

Specifically, the first user equipment sends data to the second user equipment on the PSSCH scheduled by the SCI, and periodically sends data to the second user equipment on the PSSCH and does not need to resend the SCI. Herein, periodicity indicates that data is sent once every time interval, and time intervals may be approximate or equal.

207. The network device 10 sends DCI to the first user equipment 20.

Specifically, for 207, refer to the description in 204. To avoid repetition, details are not described herein again.

208. The first user equipment 20 sends SCI to the second user equipment 30.

Specifically, for 208, refer to the description in 205. To avoid repetition, details are not described herein again.

209. The second user equipment 30 sends data to the first network device 20.

Specifically, when the DCI sent by the network device to the first user equipment instructs to activate SL SPS in the second direction, the SCI sent by the first user equipment to the second user equipment is the first SCI, indication information of the first SCI indicates that a direction of the SL SPS is the second direction, and the second user equipment sends data to the first user equipment. Alternatively, the SCI sent by the first user equipment to the second user equipment is the third SCI, and the second user equipment sends data to the first user equipment.

Specifically, the second user equipment sends data to the first user equipment on the PSSCH scheduled by the SCI, and periodically sends data to the first user equipment on the PSSCH and does not need to resend the SCI. Herein, periodicity indicates that data is sent once every time interval, and time intervals may be approximate or equal.

210. When the SL SPS in the second direction is activated, one or more times of transmission without data occur.

Specifically, if the first user equipment 20 has not received, on the resource location of the physical sidelink shared channel for one or more times, the data sent by the second user equipment 30, one or more times of transmission without data occur.

In this embodiment of this application, for the SL SPS, the RRC message sent by the network device to the first user equipment may include configuration control information (for example, implicit release after), and the control information may be an integer n, indicating that a release indication message is sent after n times of transmission without data occur in the PSSCH of the SL SPS. To be specific, the SL SPS is released by default.

211. The first user equipment 20 sends the release indication message to the network device 10.

After the first user equipment has not received, on the resource location of the physical sidelink shared channel for one or more times, the data sent by the second user equipment, the first user equipment sends a semi-persistent scheduling SPS release indication message to the network device. If the semi-persistent scheduling SPS release indication message includes identifiers of one or more second user equipments, the release indication message may instruct the network device to release SL SPS of the one or more second user equipments.

Through steps 110 and 120, this embodiment of this application enables the first user equipment 20 and the second user equipment 30 to semi-statically receive or send data on a designated PSSCH, so that the first user equipment 20 and the second user equipment 30 do not need to send a PSCCH each time data is transmitted, to reduce signaling overheads on a sidelink. Moreover, the first user equipment 20 and the second user equipment 30 do not need to transmit or decode the PSCCH, so that power consumption of the first user equipment 20 and the second user equipment 30 can be reduced.

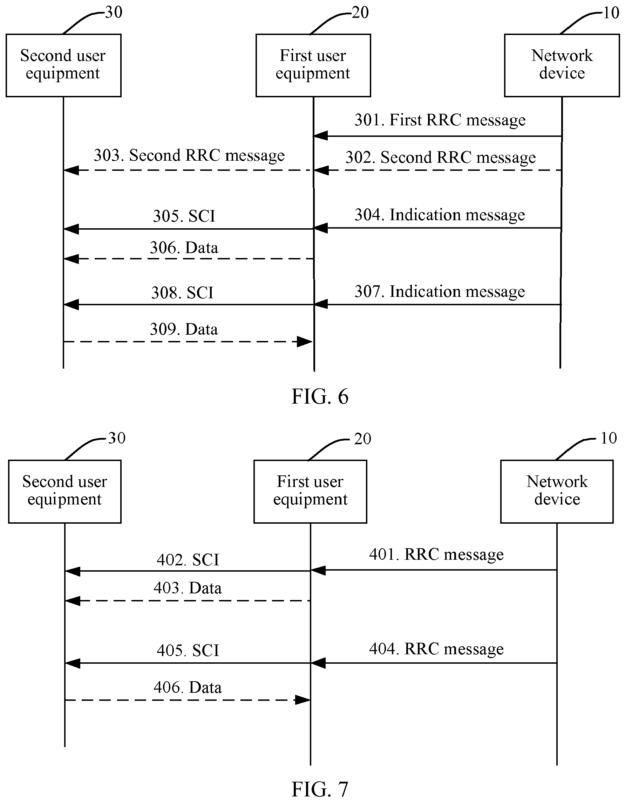

FIG. 6 is a schematic interaction flowchart of a sidelink scheduling method according to an embodiment of this application. It should be understood that, FIG. 6 shows steps or operations of a sidelink scheduling method, but these steps or operations are only an example. In this embodiment of this application, other operations or variants of the operations in FIG. 6 may be further performed. In addition, the steps in FIG. 6 may be performed in a sequence that is different from a sequence shown in FIG. 6, and may be not all operations in FIG. 6 need to be performed. A same reference number in FIG. 6 and FIG. 4 or FIG. 5 indicates a same meaning. The method shown in FIG. 6 includes the following steps.

301. A network device 10 sends a first RRC message to first user equipment 20.

Specifically, for the first RRC message, refer to the description of the first RRC message in 201 in FIG. 5. To avoid repetition, details are not described herein again.

302. The network device 10 sends a second RRC message to the first user equipment 20.

203. The first user equipment 20 sends the second RRC message to the second user equipment 30.

Specifically, for the second RRC message, refer to the description of the second RRC message in 202 and 203 in FIG. 5. To avoid repetition, details are not described herein again.

It should be noted that, when the configuration of the SL SPS included in the first RRC message is a resource configuration of the SL SPS, the network device may not need to send the second RRC message to the second user equipment to configure SL SPS. To be specific, steps 302 and 303 may not exist.

304. The network device 10 sends an indication message to the first user equipment 20.

The first information sent by the network device to the first user equipment may be indication information used to instruct to activate or release SL SPS, or the first information may be included in the indication message used to instruct to activate or release SL SPS.

Specifically, when the configuration of the SL SPS is a period configuration of the SL SPS and a resource location of the SL is configured, or when the configuration of the SL SPS is the resource configuration of the SL SPS, the network device does not need to send the DCI to the first user equipment to indicate the resource location. In this case, the first information sent by the network device to the first user equipment may be indication information used to instruct to activate or release the SL SPS, or the first information may be included in the indication message used to instruct to activate or release the SL SPS. It should be noted that, in this embodiment of this application, how to configure a resource location of the SL is not limited.

Moreover, the indication message includes the first indication bit and/or the second indication bit, and the indication message may further include the identifier of the second user equipment.

In this embodiment of this application, the indication message may trigger the first user equipment to send, to the second user equipment, second information used to activate or release SL SPS. In other words, when the first user equipment receives the indication message sent by the network device, the first user equipment sends the second information to the second user equipment.

305. The first user equipment 20 sends SCI to the second user equipment 30.

Specifically, for 305, refer to the description in 205 in FIG. 5. To avoid repetition, details are not described herein again.

306. The first user equipment 20 sends data to the second user equipment 30.

Specifically, for 306, refer to the description in 206 in FIG. 5. To avoid repetition, details are not described herein again.

307. The network device 10 sends an indication message to the first user equipment.

Specifically, for 307, refer to the description in 304. To avoid repetition, details are not described herein again.

308. The first user equipment 20 sends SCI to the second user equipment 30.

Specifically, for 308, refer to the description in 208 in FIG. 5. To avoid repetition, details are not described herein again.

309. The second user equipment 30 sends data to the first user equipment 20.

Specifically, for 309, refer to the description in 209 in FIG. 5. To avoid repetition, details are not described herein again.

Therefore, through steps 110 and 120, this embodiment of this application enables the first user equipment 20 and the second user equipment 30 to semi-statically receive or send data on a designated PSSCH, so that the first user equipment 20 and the second user equipment 30 do not need to send a PSCCH each time data is transmitted, to reduce signaling overheads on a sidelink. Moreover, the first user equipment 20 and the second user equipment 30 do not need to transmit or decode the PSCCH, so that power consumption of the first user equipment 20 and the second user equipment 30 can be reduced.

Further, in this embodiment of this application, by using a periodic characteristic of the sidelink resource, a process in which the network device configures an SL SPS period for the first user equipment and the second user equipment may be saved, to further reduce downlink signaling overheads, and also reduce SL SPS related information also stored in the first user equipment and the second user equipment, thereby further improving performance of the first user equipment and the second user equipment.

FIG. 7 is a schematic interaction flowchart of a sidelink scheduling method according to an embodiment of this application. It should be understood that, FIG. 7 shows steps or operations of a sidelink scheduling method, but these steps or operations are only an example. In this embodiment of this application, other operations or variants of the operations in FIG. 7 may be further performed. In addition, the steps in FIG. 7 may be performed in a sequence that is different from a sequence shown in FIG. 7, and may be not all operations in FIG. 7 need to be performed. A same reference number in FIG. 7 and FIG. 4, FIG. 5, or FIG. 6 indicates a same meaning. The method shown in FIG. 7 includes the following steps.

401. A network device 10 sends an RRC message to first user equipment 20.

Specifically, for the RRC message in 401, refer to the description of the first RRC message in 301 in FIG. 6. To avoid repetition, details are not described herein again.

It should be noted that, in this embodiment of this application, a configuration of SL SPS included in the RRC message may be a resource configuration of the SL SPS. In this case, the network device may not need to send the RRC message to the second user equipment to configure SL SPS. In this embodiment, whether the network device sends the RRC message to the second user equipment to configure SL SPS is not limited.

Additionally, in this embodiment of this application, the RRC message may be used to instruct to activate or release SL SPS of the second user equipment, or the first information may be included in the RRC message. To be specific, when the network device configures SL SPS, it is considered that the configured SL SPS has been activated or released, and the configured SL SPS may be used or released.

Specifically, when the first user equipment receives the RRC message sent by the network device, the first user equipment sends the second information to the second user equipment. Alternatively, when the first user equipment receives data of the second user equipment sent by the network device, the first user equipment sends the second information to the second user equipment.

To be specific, after sending the RRC message including the configuration of the semi-persistent scheduling SPS of the sidelink, the network device may not need to resend, to the first user equipment and the second user equipment, information or a message used to instruct to activate or release the semi-persistent scheduling SPS of the sidelink of the second user equipment, where in addition to configuring the semi-persistent scheduling SPS of the sidelink, the RRC message may be further used to instruct to activate or release the semi-persistent scheduling SPS of the sidelink of the second user equipment.

402. The first user equipment 20 sends SCI to the second user equipment 30.

Specifically, after receiving the RRC message, the first user equipment may send, to the second user equipment, the SCI used to activate or release the semi-persistent scheduling SPS of the sidelink of the second user equipment.

Herein, before the first user equipment sends the SCI to the second user equipment, the first user equipment may further receive the data of the second user equipment sent by the network device. To be specific, when the first user equipment receives the data of the second user equipment sent by the network device, that is, when the first user equipment needs to forward, to the second user equipment, the data sent by the network device to the second user equipment, the first user equipment may send the SCI to the second user equipment.

403. The first user equipment 20 sends data to the second user equipment 30.

Specifically, for 402 and 403, refer to the description in FIG. 5 and FIG. 6. To avoid repetition, details are not described herein again.

404. The network device 10 sends an RRC connection reconfiguration message to the first user equipment 20.

Specifically, for 404, refer to the description in 401. To avoid repetition, details are not described herein again.

405. The first user equipment 20 sends SCI to the second user equipment 30.

406. The second user equipment 30 sends data to the first user equipment 20.

Specifically, for 405 and 406, refer to the description in FIG. 5 and FIG. 6. To avoid repetition, details are not described herein again.

Therefore, through steps 110 and 120, this embodiment of this application enables the first user equipment 20 and the second user equipment 30 to semi-statically receive or send data on a designated PSSCH, so that the first user equipment 20 and the second user equipment 30 do not need to send a PSCCH each time data is transmitted, to reduce signaling overheads on a sidelink. Moreover, the first user equipment 20 and the second user equipment 30 do not need to transmit or decode the PSCCH, so that power consumption of the first user equipment 20 and the second user equipment 30 can be reduced.

Further, in this embodiment of this application, by using a periodic characteristic of the sidelink resource, a process in which the network device configures an SL SPS period for the first user equipment and the second user equipment may be saved, to further reduce downlink signaling overheads, and also reduce SL SPS related information also stored in the first user equipment and the second user equipment, thereby further improving performance of the first user equipment and the second user equipment.

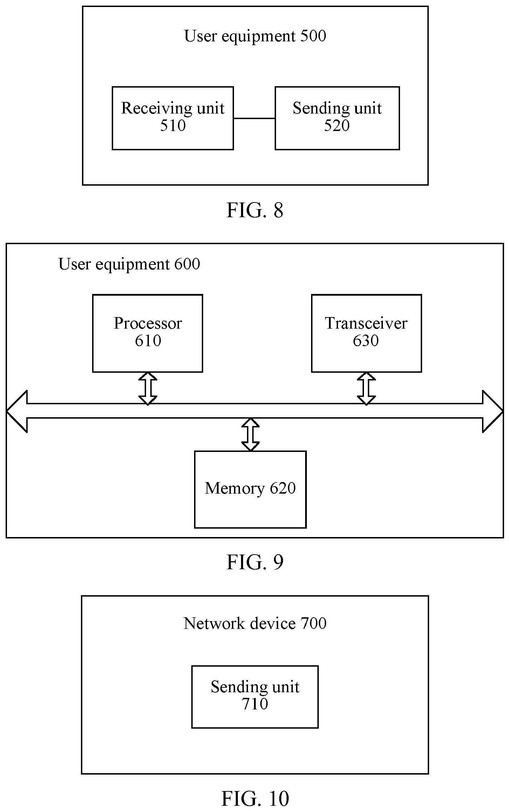

FIG. 8 is a schematic block diagram of user equipment 500 according to an embodiment of this application. The user equipment 500 includes:
a receiving unit 510, configured to receive, by the user equipment 500, first information sent by a network device, where the first information is used to instruct to activate or release semi-persistent scheduling SPS of a sidelink of at least one second user equipment; and
a sending unit 520, configured to send, by the user equipment, second information to the at least one second user equipment, where the second information is used to instruct to activate or release the semi-persistent scheduling SPS of the sidelink of the at least one second user equipment.

In some possible implementations, the first information is further used to indicate directions of the semi-persistent scheduling SPS of the sidelink, the directions of the semi-persistent scheduling SPS of the sidelink include a first direction and a second direction, the at least one second user equipment receives, in the first direction, data sent by the user equipment 500, and the user equipment 500 receives, in the second direction, data sent by the at least one second user equipment.

In some possible implementations, the receiving unit 510 is further configured to:
receive, by the user equipment 500, a first message sent by the network device, where the first message includes a configuration of semi-persistent scheduling SPS of the sidelink of the at least one second user equipment connected to the user equipment 500, where
the configuration of the semi-persistent scheduling SPS of the sidelink includes at least one of a configuration of semi-persistent scheduling SPS of the sidelink in the first direction and a configuration of semi-persistent scheduling SPS of the sidelink in the second direction.

In some possible implementations, the sending unit 520 is further configured to:
forward, by the user equipment 500 to the at least one second user equipment, a second message sent by the network device, where the second message includes a configuration of semi-persistent scheduling SPS of the sidelink of the at least one second user equipment connected to the user equipment 500, where
the configuration of the semi-persistent scheduling SPS of the sidelink includes at least one of a configuration of semi-persistent scheduling SPS of the sidelink in the first direction and a configuration of semi-persistent scheduling SPS of the sidelink in the second direction.

In some possible implementations, the first information is included in a third message, and the receiving unit 510 is specifically configured to:
receive, by the user equipment 500, the third message sent by the network device, where the third message further includes a configuration of semi-persistent scheduling SPS of the sidelink of the at least one second user equipment connected to the user equipment 500, where
the configuration of the semi-persistent scheduling SPS of the sidelink includes at least one of a configuration of semi-persistent scheduling SPS of the sidelink in the first direction and a configuration of semi-persistent scheduling SPS of the sidelink in the second direction.

In some possible implementations, the configuration of the semi-persistent scheduling SPS of the sidelink is a period configuration of the semi-persistent scheduling SPS; or the configuration of the semi-persistent scheduling SPS of the sidelink is a resource configuration of the semi-persistent scheduling SPS.

In some possible implementations, the first information is downlink control information scrambled by using a first radio network temporary identifier RNTI, where the first RNTI is an RNTI corresponding to the at least one second user equipment, or the first RNTI is an RNTI corresponding to the user equipment 500.

If the first RNTI is an RNTI corresponding to the user equipment, the downlink control information further includes an identifier of the at least one second user equipment.

In some possible implementations, the first information is included in an indication message, and the receiving unit 510 is specifically configured to:
receive, by the user equipment 500, the indication message sent by the network device, where the indication message further includes an identifier of the at least one second user equipment.

In some possible implementations, the second information is first sidelink control information, the first sidelink control information further includes indication information, and the indication information is used to indicate the directions of the semi-persistent scheduling SPS of the sidelink.

In some possible implementations, the second information is second sidelink control information, and the second sidelink control information is used to indicate a resource location of a physical sidelink shared channel sent in the first direction; or the second information is third sidelink control information, and the third sidelink control information is used to indicate a resource location of a physical sidelink shared channel sent in the second direction.

In this embodiment of this application, the user equipment 500 is the foregoing first user equipment 20. This embodiment of this application enables the first user equipment 20 and the second user equipment 30 to semi-statically receive or send data on a designated PSSCH, so that the first user equipment 20 and the second user equipment 30 do not need to send a PSCCH each time data is transmitted, to reduce signaling overheads on a sidelink. Moreover, the first user equipment 20 and the second user equipment 30 do not need to transmit or decode the PSCCH, so that power consumption of the first user equipment 20 and the second user equipment 30 can be reduced.

It should be noted that, in this embodiment of the present invention, the receiving unit 510 and the sending unit 520 may be implemented by a transceiver. As shown in FIG. 9, user equipment 600 may include a processor 610, a memory 620, and a transceiver 630. The memory 620 may be configured to store code executed by the processor 610 and the like, and the processor 610 may be configured to process data or a program.

In an implementation process, each step of the foregoing method may be completed by using an integrated logical circuit of hardware in the processor 610 or an instruction in a form of software. The steps of the methods disclosed with reference to the embodiments of the present invention may be directly implemented by a hardware processor, or may be implemented by a combination of hardware of a processor and a software module. The software module may be located in a mature storage medium in the art, such as a random access memory, a flash memory, a read-only memory, a programmable read-only memory or electrically erasable programmable memory, or a register. The storage medium is located in the memory 620, and the processor 610 reads information in the memory 620 and completes the steps of the foregoing method in combination with the hardware of the processor 610. To avoid repetition, details are not described herein again.

The user equipment 500 shown in FIG. 8 or the user equipment 600 shown in FIG. 9 can implement processes corresponding to method embodiments shown in FIG. 4 to FIG. 7. Specifically, for the user equipment 500 or the user equipment 600, refer to the description in FIG. 4 to FIG. 7. To avoid repetition, details are not described herein again.

FIG. 10 is a schematic block diagram of a network device 700 according to an embodiment of this application. The network device 700 includes:
a sending unit 710, configured to send, by the network device 700, first information to first user equipment, where the first information is used to instruct to activate or release semi-persistent scheduling SPS of a sidelink of at least one second user equipment.

In some possible implementations, the first information is further used to indicate directions of the semi-persistent scheduling SPS of the sidelink, the directions of the semi-persistent scheduling SPS of the sidelink include a first direction and a second direction, the at least one second user equipment receives, in the first direction, data sent by the first user equipment, and the first user equipment receives, in the second direction, data sent by the at least one second user equipment.

In some possible implementations, the sending unit 710 is further configured to:
send, by the network device 700, a first message to the first user equipment, where the first message includes a configuration of semi-persistent scheduling SPS of the sidelink of the at least one second user equipment connected to the first user equipment, where
the configuration of the semi-persistent scheduling SPS of the sidelink includes at least one of a configuration of semi-persistent scheduling SPS of the sidelink in the first direction and a configuration of semi-persistent scheduling SPS of the sidelink in the second direction.

In some possible implementations, the sending unit 710 is further configured to:
send, by the network device 700, a second message to the first user equipment, where the second message includes a configuration of semi-persistent scheduling SPS of the sidelink of the at least one second user equipment connected to the first user equipment, where
the configuration of the semi-persistent scheduling SPS of the sidelink includes at least one of a configuration of semi-persistent scheduling SPS of the sidelink in the first direction and a configuration of semi-persistent scheduling SPS of the sidelink in the second direction.

In some possible implementations, the first information is included in a third message, and the sending unit 710 is specifically configured to:
send, by the network device 700, the third message to the first user equipment, where the third message includes a configuration of semi-persistent scheduling SPS of the sidelink of the at least one second user equipment connected to the first user equipment, where
the configuration of the semi-persistent scheduling SPS of the sidelink includes at least one of a configuration of semi-persistent scheduling SPS of the sidelink in the first direction and a configuration of semi-persistent scheduling SPS of the sidelink in the second direction.

In some possible implementations, the configuration of the semi-persistent scheduling SPS of the sidelink is a period configuration of the semi-persistent scheduling SPS; or the configuration of the semi-persistent scheduling SPS of the sidelink is a resource configuration of the semi-persistent scheduling SPS.

In some possible implementations, the first information is downlink control information scrambled by using a first radio network temporary identifier RNTI, where the first RNTI is an RNTI corresponding to the at least one second user equipment, or the first RNTI is an RNTI corresponding to the first user equipment.

If the first RNTI is an RNTI corresponding to the first user equipment, the downlink control information further includes an identifier of the at least one second user equipment.

In some possible implementations, the first information is included in an indication message, and the sending unit 710 is specifically configured to:
send, by the network device 700, the indication message to the first user equipment, where the indication message further includes an identifier of the at least one second user equipment.

Implementation of this embodiment of this application enables the first user equipment 20 and the second user equipment 30 to semi-statically receive or send data on a designated PSSCH, so that the first user equipment 20 and the second user equipment 30 do not need to send a PSCCH each time data is transmitted, to reduce signaling overheads on a sidelink. Moreover, the first user equipment 20 and the second user equipment 30 do not need to transmit or decode the PSCCH, so that power consumption of the first user equipment 20 and the second user equipment 30 can be reduced.

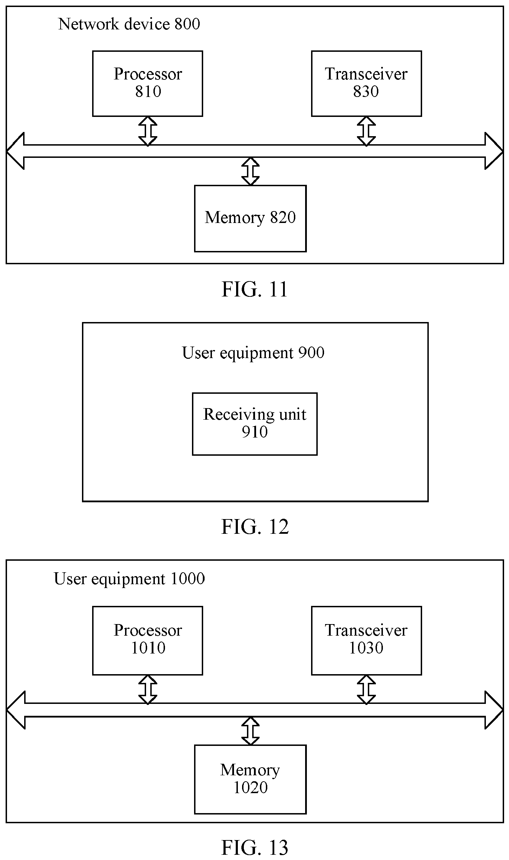

It should be noted that, in this embodiment of the present invention, the sending unit 710 may be implemented by a transceiver. As shown in FIG. 11, a network device 800 may include a processor 810, a memory 820, and a transceiver 830. The memory 820 may be configured to store code executed by the processor 810 and the like, and the processor 810 may be configured to process data or a program.

In an implementation process, each step of the foregoing method may be completed by using an integrated logical circuit of hardware in the processor 810 or an instruction in a form of software. The steps of the methods disclosed with reference to the embodiments of the present invention may be directly implemented by a hardware processor, or may be implemented by a combination of hardware of a processor and a software module. The software module may be located in a mature storage medium in the art, such as a random access memory, a flash memory, a read-only memory, a programmable read-only memory or electrically erasable programmable memory, or a register. The storage medium is located in the memory 820, and the processor 810 reads information in the memory 820 and completes the steps of the foregoing method in combination with the hardware of the processor 810. To avoid repetition, details are not described herein again.

The network device 700 shown in FIG. 10 or the network device 800 shown in FIG. 11 can implement processes corresponding to method embodiments shown in FIG. 4 to FIG. 7. Specifically, for the network device 700 or the network device 800, refer to the description in FIG. 4 to FIG. 7. To avoid repetition, details are not described herein again.

FIG. 12 is a schematic block diagram of user equipment 900 according to an embodiment of this application. The user equipment 900 includes:
a receiving unit 910, configured to receive, by the user equipment 900, second information sent by first user equipment, where the second information is used to instruct to activate or release semi-persistent scheduling SPS of a sidelink of the user equipment 900.

In some possible implementations, directions of the semi-persistent scheduling SPS of the sidelink include a first direction and a second direction, the user equipment 900 receives, in the first direction, data sent by the first user equipment, and the first user equipment receives, in the second direction, data sent by the user equipment 900.

In some possible implementations, the second information is first sidelink control information, the first sidelink control information further includes indication information, and the indication information is used to indicate the directions of the semi-persistent scheduling SPS of the sidelink.

In some possible implementations, the second information is second sidelink control information, and the second sidelink control information is used to indicate a resource location of a physical sidelink shared channel sent in the first direction; or the second information is third sidelink control information, and the third sidelink control information is used to indicate a resource location of a physical sidelink shared channel sent in the second direction.

In some possible implementations, the second information is sidelink control information scrambled by using a second radio network temporary identifier RNTI.

In this embodiment of this application, the user equipment 900 is the foregoing second user equipment 30. This embodiment of this application enables the first user equipment 20 and the second user equipment 30 to semi-statically receive or send data on a designated PSSCH, so that the first user equipment 20 and the second user equipment 30 do not need to send a PSCCH each time data is transmitted, to reduce signaling overheads on a sidelink. Moreover, the first user equipment 20 and the second user equipment 30 do not need to transmit or decode the PSCCH, so that power consumption of the first user equipment 20 and the second user equipment 30 can be reduced.

It should be noted that, in this embodiment of the present invention, the receiving unit 910 may be implemented by a transceiver. As shown in FIG. 13, user equipment 1000 may include a processor 1010, a memory 1020, and a transceiver 1030. The memory 1020 may be configured to store code executed by the processor 1010 and the like, and the processor 1010 may be configured to process data or a program.

In an implementation process, each step of the foregoing method may be completed by using an integrated logical circuit of hardware in the processor 1010 or an instruction in a form of software. The steps of the methods disclosed with reference to the embodiments of the present invention may be directly implemented by a hardware processor, or may be implemented by a combination of hardware of a processor and a software module. The software module may be located in a mature storage medium in the art, such as a random access memory, a flash memory, a read-only memory, a programmable read-only memory or electrically erasable programmable memory, or a register. The storage medium is located in the memory 1020, and the processor 1010 reads information in the memory 1020 and completes the steps of the foregoing method in combination with the hardware of the processor 1010. To avoid repetition, details are not described herein again.

The user equipment 900 shown in FIG. 12 or the user equipment 1000 shown in FIG. 13 can implement processes corresponding to method embodiments shown in FIG. 4 to FIG. 7. Specifically, for the user equipment 900 or the user equipment 1000, refer to the description in FIG. 4 to FIG. 7. To avoid repetition, details are not described herein again.

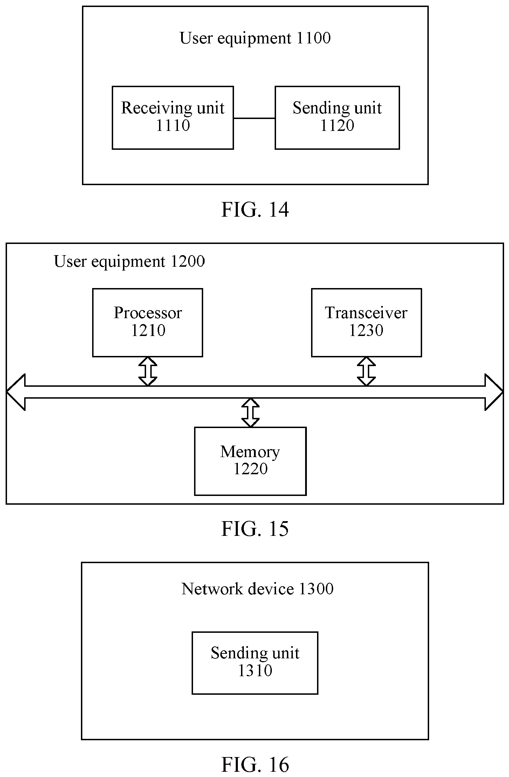

FIG. 14 is a schematic block diagram of user equipment 1100 according to an embodiment of this application. The user equipment 1100 includes:
a receiving unit 1110, configured to receive, by the user equipment 1100, a first message sent by a network device, where the first message includes a configuration of semi-persistent scheduling SPS of a sidelink of at least one second user equipment connected to the user equipment 1100; and
a sending unit 1120, configured to send, by the user equipment 1100, second information to the at least one second user equipment, where the second information is used to instruct to activate or release the semi-persistent scheduling SPS of the sidelink of the at least one second user equipment.

In some possible implementations, the receiving unit 1110 is further configured to receive, by the user equipment 1100, data of the at least one second user equipment sent by the network device.

In some possible implementations, directions of the semi-persistent scheduling SPS of the sidelink include a first direction and a second direction, and the configuration of the semi-persistent scheduling SPS of the sidelink includes at least one of a configuration of semi-persistent scheduling SPS of the sidelink in the first direction and a configuration of semi-persistent scheduling SPS of the sidelink in the second direction, where
the at least one second user equipment receives, in the first direction, data sent by the user equipment 1100, and the user equipment 1100 receives, in the second direction, data sent by the at least one second user equipment.

In some possible implementations, the sending unit 1120 is further configured to: forward, by the user equipment 1100 to the at least one second user equipment, a third message sent by the network device, where the third message includes a configuration of semi-persistent scheduling SPS of the sidelink of the at least one second user equipment.

In some possible implementations, the configuration of the semi-persistent scheduling SPS of the sidelink is a period configuration of the semi-persistent scheduling SPS; or the configuration of the semi-persistent scheduling SPS of the sidelink is a resource configuration of the semi-persistent scheduling SPS.

In some possible implementations, the second information is first sidelink control information, the first sidelink control information further includes indication information, and the indication information is used to indicate the directions of the semi-persistent scheduling SPS of the sidelink.

In some possible implementations, the second information is second sidelink control information, and the second sidelink control information is used to indicate a resource location of a physical sidelink shared channel sent in the first direction; or the second information is third sidelink control information, and the third sidelink control information is used to indicate a resource location of a physical sidelink shared channel sent in the second direction.

In this embodiment of this application, the user equipment 1100 is the foregoing first user equipment 20. This embodiment of this application enables the first user equipment 20 and the second user equipment 30 to semi-statically receive or send data on a designated PSSCH, so that the first user equipment 20 and the second user equipment 30 do not need to send a PSCCH each time data is transmitted, to reduce signaling overheads on a sidelink. Moreover, the first user equipment 20 and the second user equipment 30 do not need to transmit or decode the PSCCH, so that power consumption of the first user equipment 20 and the second user equipment 30 can be reduced.

It should be noted that, in this embodiment of the present invention, the receiving unit 1110 and the sending unit 1120 may be implemented by a transceiver. As shown in FIG. 15, user equipment 1200 may include a processor 1210, a memory 1220, and a transceiver 1230. The memory 1220 may be configured to store code executed by the processor 1210 and the like, and the processor 1210 may be configured to process data or a program.

In an implementation process, each step of the foregoing method may be completed by using an integrated logical circuit of hardware in the processor 1210 or an instruction in a form of software. The steps of the methods disclosed with reference to the embodiments of the present invention may be directly implemented by a hardware processor, or may be implemented by a combination of hardware of a processor and a software module. The software module may be located in a mature storage medium in the art, such as a random access memory, a flash memory, a read-only memory, a programmable read-only memory or electrically erasable programmable memory, or a register. The storage medium is located in the memory 1220, and the processor 1210 reads information in the memory 1220 and completes the steps of the foregoing method in combination with the hardware of the processor 1210. To avoid repetition, details are not described herein again.

The user equipment 1100 shown in FIG. 14 or the user equipment 1200 shown in FIG. 15 can implement processes corresponding to method embodiments shown in FIG. 4 to FIG. 7. Specifically, for the user equipment 1100 or the user equipment 1200, refer to the description in FIG. 4 to FIG. 7. To avoid repetition, details are not described herein again.

FIG. 16 is a schematic block diagram of a network device 1300 according to an embodiment of this application. The network device 1300 includes:
a sending unit 1310, configured to send, by the network device 1300, a first message to first user equipment, where the first message includes a configuration of semi-persistent scheduling SPS of a sidelink of at least one second user equipment connected to the first user equipment.

In some possible implementations, the sending unit 1310 is further configured to send, by the network device 1300, data of the at least one second user equipment to the first user equipment.

In some possible implementations, directions of the semi-persistent scheduling SPS of the sidelink include a first direction and a second direction, and the configuration of the semi-persistent scheduling SPS of the sidelink includes at least one of a configuration of semi-persistent scheduling SPS of the sidelink in the first direction and a configuration of semi-persistent scheduling SPS of the sidelink in the second direction, where
the at least one second user equipment receives, in the first direction, data sent by the first user equipment, and the first user equipment receives, in the second direction, data sent by the at least one second user equipment.

In some possible implementations, the sending unit 1310 is further configured to send, by the network device 1300, a third message to the first user equipment, where the third message includes a configuration of semi-persistent scheduling SPS of the sidelink of the at least one second user equipment.

In some possible implementations, the configuration of the semi-persistent scheduling SPS of the sidelink is a period configuration of the semi-persistent scheduling SPS; or the configuration of the semi-persistent scheduling SPS of the sidelink is a resource configuration of the semi-persistent scheduling SPS.

This embodiment of this application enables the first user equipment 20 and the second user equipment 30 to semi-statically receive or send data on a designated PSSCH, so that the first user equipment 20 and the second user equipment 30 do not need to send a PSCCH each time data is transmitted, to reduce signaling overheads on a sidelink. Moreover, the first user equipment 20 and the second user equipment 30 do not need to transmit or decode the PSCCH, so that power consumption of the first user equipment 20 and the second user equipment 30 can be reduced.

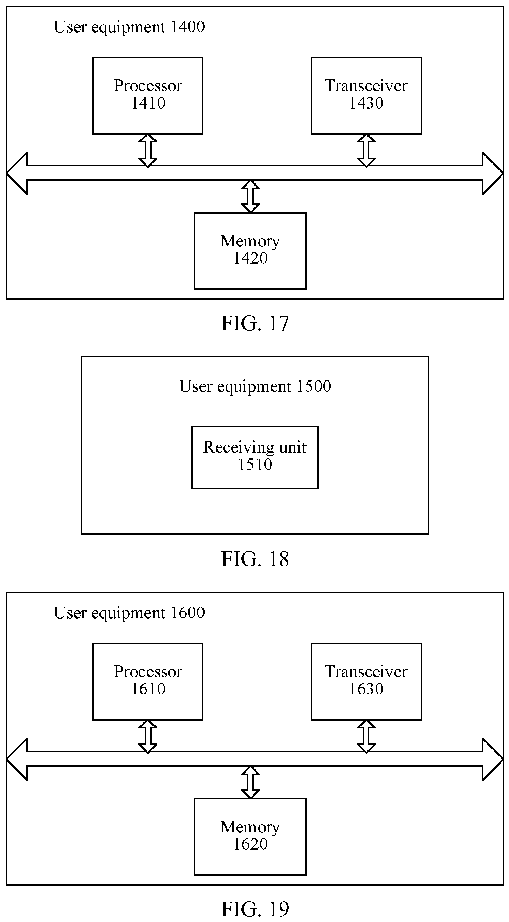

It should be noted that, in this embodiment of the present invention, the sending unit 1310 may be implemented by a transceiver. As shown in FIG. 17, a network device 1400 may include a processor 1410, a memory 1420, and a transceiver 1430. The memory 1420 may be configured to store code executed by the processor 1410 and the like, and the processor 1410 may be configured to process data or a program.

In an implementation process, each step of the foregoing method may be completed by using an integrated logical circuit of hardware in the processor 1410 or an instruction in a form of software. The steps of the methods disclosed with reference to the embodiments of the present invention may be directly implemented by a hardware processor, or may be implemented by a combination of hardware of a processor and a software module. The software module may be located in a mature storage medium in the art, such as a random access memory, a flash memory, a read-only memory, a programmable read-only memory or electrically erasable programmable memory, or a register. The storage medium is located in the memory 1420, and the processor 1410 reads information in the memory 1420 and completes the steps of the foregoing method in combination with the hardware of the processor 1410. To avoid repetition, details are not described herein again.

The network device 1300 shown in FIG. 16 or the network device 1400 shown in FIG. 17 can implement processes corresponding to method embodiments shown in FIG. 4 to FIG. 7. Specifically, for the network device 1300 or the network device 1400, refer to the description in FIG. 4 to FIG. 7. To avoid repetition, details are not described herein again.

FIG. 18 is a schematic block diagram of user equipment 1500 according to an embodiment of this application. The user equipment 1500 includes:
a receiving unit 1510, configured to receive, by the user equipment 1500, second information sent by first user equipment, where the second information is used to instruct to activate or release semi-persistent scheduling SPS of a sidelink of the user equipment 1500.

In some possible implementations, directions of the semi-persistent scheduling SPS of the sidelink include a first direction and a second direction, and the configuration of the semi-persistent scheduling SPS of the sidelink includes at least one of a configuration of semi-persistent scheduling SPS of the sidelink in the first direction and a configuration of semi-persistent scheduling SPS of the sidelink in the second direction, where
the user equipment 1500 receives, in the first direction, data sent by the first user equipment, and the first user equipment receives, in the second direction, data sent by the user equipment 1500.

In some possible implementations, the receiving unit 1510 is further configured to receive, by the user equipment 1500, a third message that is sent by the network device and that is forwarded by the first user equipment, where the third message includes a configuration of semi-persistent scheduling SPS of the sidelink of the user equipment 1500.

In some possible implementations, the configuration of the semi-persistent scheduling SPS of the sidelink is a period configuration of the semi-persistent scheduling SPS; or the configuration of the semi-persistent scheduling SPS of the sidelink is a resource configuration of the semi-persistent scheduling SPS.

In some possible implementations, the second information is first sidelink control information, the first sidelink control information further includes indication information, and the indication information is used to indicate the directions of the semi-persistent scheduling SPS of the sidelink.

In some possible implementations, the second information is second sidelink control information, and the second sidelink control information is used to indicate a resource location of a physical sidelink shared channel sent in the first direction; or the second information is third sidelink control information, and the third sidelink control information is used to indicate a resource location of a physical sidelink shared channel sent in the second direction.

In some possible implementations, the second information is sidelink control information scrambled by using a second radio network temporary identifier RNTI.

In this embodiment of this application, the user equipment 1500 may be the foregoing second user equipment 30. This embodiment of this application enables the first user equipment 20 and the second user equipment 30 to semi-statically receive or send data on a designated PSSCH, so that the first user equipment 20 and the second user equipment 30 do not need to send a PSCCH each time data is transmitted, to reduce signaling overheads on a sidelink. Moreover, the first user equipment 20 and the second user equipment 30 do not need to transmit or decode the PSCCH, so that power consumption of the first user equipment 20 and the second user equipment 30 can be reduced.

It should be noted that, in this embodiment of the present invention, the receiving unit 1510 may be implemented by a transceiver. As shown in FIG. 19, user equipment 1600 may include a processor 1610, a memory 1620, and a transceiver 1630. The memory 1620 may be configured to store code executed by the processor 1610 and the like, and the processor 1610 may be configured to process data or a program.

In an implementation process, each step of the foregoing method may be completed by using an integrated logical circuit of hardware in the processor 1610 or an instruction in a form of software. The steps of the methods disclosed with reference to the embodiments of the present invention may be directly implemented by a hardware processor, or may be implemented by a combination of hardware of a processor and a software module. The software module may be located in a mature storage medium in the art, such as a random access memory, a flash memory, a read-only memory, a programmable read-only memory or electrically erasable programmable memory, or a register. The storage medium is located in the memory 1620, and the processor 1610 reads information in the memory 1620 and completes the steps of the foregoing method in combination with the hardware of the processor 1610. To avoid repetition, details are not described herein again.

The user equipment 1500 shown in FIG. 18 or the user equipment 1600 shown in FIG. 19 can implement processes corresponding to method embodiments shown in FIG. 4 to FIG. 7. Specifically, for the user equipment 1500 or the user equipment 1600, refer to the description in FIG. 4 to FIG. 7. To avoid repetition, details are not described herein again.

A person of ordinary skill in the art may be aware that, the units and algorithm steps in the examples described with reference to the embodiments disclosed in this specification may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the system, apparatus, and unit, refer to a corresponding process in the method embodiments. Details are not described herein again.

In the several embodiments provided in this application, it should be understood that the disclosed system, apparatus, and method may be implemented in other manners. For example, the described apparatus embodiment is merely an example. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of the embodiments.

In addition, functional units in the embodiments of this application may be integrated into one processing unit, or each of the units may exist alone physically, or two or more units may be integrated into one unit.

When the functions are implemented in a form of a software functional unit and sold or used as an independent product, the functions may be stored in a computer-readable storage medium. Based on such an understanding, the technical solutions of this application essentially, or the part contributing to the prior art, or some of the technical solutions may be implemented in a form of a software product. The computer software product is stored in a storage medium, and includes several instructions for instructing a computer device (which may be a personal computer, a server, a network device, or the like) to perform all or some of the steps of the methods described in the embodiments of this application. The foregoing storage medium includes: any medium that can store program code, such as a USB flash drive, a removable hard disk, a read-only memory (Read-Only Memory, ROM), a random access memory (Random Access Memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A semi-persistent scheduling method, wherein the method comprises:
receiving, by a first device, first information sent by a network device, wherein the first information is used to instruct to activate or release semi-persistent scheduling SPS of at least one second device; and
sending, by the first device, second information to the at least one second device, wherein the second information is used to instruct to activate or release the semi-persistent scheduling SPS of the at least one second device.

2. The method according to claim 1, wherein the first information is further used to indicate directions of the semi-persistent scheduling SPS, the directions of the semi-persistent scheduling SPS comprise a first direction and a second direction, the at least one second device receives, in the first direction, data sent by the first device, and the first device receives, in the second direction, data sent by the at least one second device.

3. The method according to claim 1 or 2, wherein before the receiving, by a first device, first information sent by a network device, the method further comprises:
receiving, by the first device, a first message sent by the network device, wherein the first message comprises a configuration of the semi-persistent scheduling SPS of the at least one second device connected to the first device, wherein
the configuration of the semi-persistent scheduling SPS comprises at least one of a configuration of semi-persistent scheduling SPS in the first direction and a configuration of semi-persistent scheduling SPS in the second direction.

4. The method according to any one of claims 1 to 3, wherein before the receiving, by a first device, first information sent by a network device, the method further comprises:
forwarding, by the first device to the at least one second device, a second message sent by the network device, wherein the second message comprises the configuration of the semi-persistent scheduling SPS of the at least one second device connected to the first device, wherein
the configuration of the semi-persistent scheduling SPS comprises at least one of a configuration of semi-persistent scheduling SPS in the first direction and a configuration of semi-persistent scheduling SPS in the second direction.

5. The method according to claim 1 or 2, wherein the first information is comprised in a third message, and the receiving, by a first device, first information sent by a network device comprises:
receiving, by the first device, the third message sent by the network device, wherein the third message further comprises a configuration of the semi-persistent scheduling SPS of the at least one second device connected to the first device, wherein
the configuration of the semi-persistent scheduling SPS comprises at least one of a configuration of semi-persistent scheduling SPS in the first direction and a configuration of semi-persistent scheduling SPS in the second direction.

6. The method according to any one of claims 3 to 5, wherein
the configuration of the semi-persistent scheduling SPS is a period configuration of the semi-persistent scheduling SPS; or
the configuration of the semi-persistent scheduling SPS is a resource configuration of the semi-persistent scheduling SPS.

7. The method according to any one of claims 1 to 4, wherein the first information is downlink control information scrambled by using a first radio network temporary identifier RNTI, wherein the first RNTI is an RNTI corresponding to the at least one second device, or the first RNTI is an RNTI corresponding to the first device; and
if the first RNTI is an RNTI corresponding to the first device, the downlink control information further comprises an identifier of the at least one second device.

8. The method according to any one of claims 1 to 4, wherein the first information is comprised in an indication message, and the receiving, by a first device, first information sent by a network device comprises:
receiving, by the first device, the indication message sent by the network device, wherein the indication message further comprises an identifier of the at least one second device.

9. The method according to any one of claims 2 to 8, wherein the second information is first control information, the first control information further comprises indication information, and the indication information is used to indicate directions of the semi-persistent scheduling SPS, wherein
the first control information is downlink control information or sidelink control information.

10. The method according to any one of claims 2 to 8, wherein
the second information is second control information, the second control information is used to indicate a resource location of a physical shared channel sent in the first direction, the second control information is downlink control information or sidelink control information, and the physical shared channel is a physical sidelink shared channel or a physical downlink shared channel; or
the second information is third control information, the third control information is used to indicate a resource location of a physical shared channel sent in the second direction, the third control information is downlink control information or sidelink control information, and the physical shared channel is a physical sidelink shared channel or a physical downlink shared channel.

11. A semi-persistent scheduling method, wherein the method comprises:
sending, by a network device, first information to a first device, wherein the first information is used to instruct to activate or release semi-persistent scheduling SPS of at least one second device.

12. The method according to claim 11, wherein the first information is further used to indicate directions of the semi-persistent scheduling SPS, the directions of the semi-persistent scheduling SPS comprise a first direction and a second direction, the at least one second device receives, in the first direction, data sent by the first device, and the first device receives, in the second direction, data sent by the at least one second device.

13. The method according to claim 11 or 12, wherein before the sending, by a network device, first information to a first device, the method further comprises:
sending, by the network device, a first message to the first device, wherein the first message comprises a configuration of the semi-persistent scheduling SPS of the at least one second device connected to the first device, wherein
the configuration of the semi-persistent scheduling SPS comprises at least one of a configuration of semi-persistent scheduling SPS in the first direction and a configuration of semi-persistent scheduling SPS in the second direction.

14. The method according to any one of claims 11 to 13, wherein before the sending, by a network device, first information to a first device, the method further comprises:
sending, by the network device, a second message to the first device, wherein the second message comprises the configuration of the semi-persistent scheduling SPS of the at least one second device connected to the first device, wherein
the configuration of the semi-persistent scheduling SPS comprises at least one of a configuration of semi-persistent scheduling SPS in the first direction and a configuration of semi-persistent scheduling SPS in the second direction.

15. The method according to claim 11 or 12, wherein the first information is comprised in a third message, and the sending, by a network device, first information to a first device comprises:
sending, by the network device, the third message to the first device, wherein the third message comprises a configuration of the semi-persistent scheduling SPS of the at least one second device connected to the first device, wherein
the configuration of the semi-persistent scheduling SPS comprises at least one of a configuration of semi-persistent scheduling SPS in the first direction and a configuration of semi-persistent scheduling SPS in the second direction.

16. A semi-persistent scheduling method, wherein the method comprises:
receiving, by a second device, second information sent by a first device, wherein the second information is used to instruct to activate or release semi-persistent scheduling SPS of the second device.

17. The method according to claim 16, wherein directions of the semi-persistent scheduling SPS comprise a first direction and a second direction, the second device receives, in the first direction, data sent by the first device, and the first device receives, in the second direction, data sent by the second device.

18. The method according to claim 16 or 17, wherein the second information is control information scrambled by using a second radio network temporary identifier RNTI, wherein
the control information is downlink control information or sidelink control information.

19. A device, comprising:
a receiving unit, configured to receive, by the device, first information sent by a network device, wherein the first information is used to instruct to activate or release semi-persistent scheduling SPS of at least one second device; and
a sending unit, configured to send, by the device, second information to the at least one second device, wherein the second information is used to instruct to activate or release the semi-persistent scheduling SPS of the at least one second device.

20. The device according to claim 19, wherein the receiving unit is further configured to:
receive, by the device, a first message sent by the network device, wherein the first message comprises a configuration of the semi-persistent scheduling SPS of the at least one second device connected to the device, wherein
the configuration of the semi-persistent scheduling SPS comprises at least one of the configuration of the semi-persistent scheduling SPS in the first direction and a configuration of semi-persistent scheduling SPS in the second direction.

21. The device according to claim 19 or 20, wherein the sending unit is further configured to:
forward, by the device to the at least one second device, a second message sent by the network device, wherein the second message comprises a configuration of semi-persistent scheduling SPS of the at least one second device connected to the device, wherein
the configuration of the semi-persistent scheduling SPS comprises at least one of the configuration of the semi-persistent scheduling SPS in the first direction and the configuration of the semi-persistent scheduling SPS in the second direction.

22. The device according to claim 19, wherein the first information is comprised in a third message, and the receiving unit is specifically configured to:
receive, by the device, the third message sent by the network device, wherein the third message further comprises a configuration of semi-persistent scheduling SPS of the at least one second device connected to the user equipment, wherein
the configuration of the semi-persistent scheduling SPS comprises at least one of a configuration of semi-persistent scheduling SPS in the first direction and a configuration of semi-persistent scheduling SPS in the second direction.

23. The device according to claim 19 or 20, wherein the first information is comprised in an indication message, and the receiving unit is specifically configured to:
receive, by the device, the indication message sent by the network device, wherein the indication message further comprises an identifier of the at least one second device.

24. The device according to any one of claims 20 to 23, wherein the second information is first control information, the first control information further comprises indication information, and the indication information is used to indicate directions of the semi-persistent scheduling SPS, wherein
the first control information is downlink control information or sidelink control information.

25. The user equipment according to any one of claims 20 to 23, wherein
the second information is second control information, the second control information is used to indicate a resource location of a physical sidelink shared channel sent in the first direction, the second control information is downlink control information or sidelink control information, and the physical shared channel is a physical sidelink shared channel or a physical downlink shared channel; or
the second information is third control information, the third control information is used to indicate a resource location of a physical sidelink shared channel sent in the second direction, the third control information is downlink control information or sidelink control information, and the physical shared channel is a physical sidelink shared channel or a physical downlink shared channel.

26. A network device, comprising:
a sending unit, configured to send, by the network device, first information to a first device, wherein the first information is used to instruct to activate or release semi-persistent scheduling SPS of at least one second device.

27. The network device according to claim 26, wherein the sending unit is further configured to:
send, by the network device, a first message to the first device, wherein the first message comprises a configuration of semi-persistent scheduling SPS of the at least one second device connected to the first device, wherein
the configuration of the semi-persistent scheduling SPS comprises at least one of a configuration of semi-persistent scheduling SPS in the first direction and a configuration of semi-persistent scheduling SPS in the second direction.

28. The network device according to claim 26, wherein the first information is comprised in a third message, and the sending unit is specifically configured to:
send, by the network device, the third message to the first device, wherein the third message comprises a configuration of semi-persistent scheduling SPS of the at least one second device connected to the first device, wherein
the configuration of the semi-persistent scheduling SPS comprises at least one of a configuration of semi-persistent scheduling SPS in the first direction and a configuration of semi-persistent scheduling SPS in the second direction.

29. A device, comprising:
a receiving unit, configured to receive, by the device, second information sent by a first device, wherein the second information is used to instruct to activate or release semi-persistent scheduling SPS of the device.

30. The device according to claim 29, wherein the second information is control information scrambled by using a second radio network temporary identifier RNTI, wherein
the control information is downlink control information or sidelink control information.
